# EUROPEAN PATENT APPLICATION

(11) **EP 4 799 875 A1**
(43) Date of publication of application: **02.09.2026**
(21) Application number: 26154465.4
(22) Date of filing: 27.01.2026
(51) Int. Cl.: B60R 25/24

(54) **MANAGEMENT SYSTEM, MANAGEMENT SERVER, DELETION PROGRAM, AND DELETION METHOD**

(30) Priority: 28.02.2025 JP 2025031968
(71) Applicant: Toyota Jidosha Kabushiki Kaisha, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); MATSUMOTO, Satoshi, Toyota-shi, 471-8571 (JP); MURASE, Junji, Ohguchi-cho, 480-0195 (JP); MORI, Yuki, Ohguchi-cho, 480-0195 (JP); HASEGAWA, Yosuke, Ohguchi-cho, 480-0195 (JP)
(74) Representative: J A Kemp LLP

(57) **Abstract**

In response to a request to delete a target digital key, a management system (10) transmits a deletion request to a target device and a vehicle (20). When transmitting the deletion request, if both the target device and the vehicle (20) are in a non-communicable state, the management system (10) retransmits the deletion request when at least one of the target device and the vehicle (20) is restored to a communicable state.

## Description

### CROSS-REFERENCE TO RELATED APPLICATIONS

This application is based upon and claims the benefit of priority from Japanese Patent Application No. 2025-031968, filed on February 28, 2025, the entire contents of which are incorporated herein by reference.

### BACKGROUND

### 1. Field

The following description relates to a management system, a management server, a deletion program, and a deletion method.

### 2. Description of Related Art

JA2024-1720A describes a digital key management system. The management system includes a vehicle, multiple devices, and a management server. The vehicle includes a vehicle management device that stores authentication information, which is used to authenticate a digital key when the digital key is registered. The devices each store key information indicating a digital key when the digital key is registered. The management server is configured to communicate with both the devices and the vehicle. The management server manages registration of the digital keys.

Each of the devices is allowed to request deletion of the digital key of another device. The deletion of the digital key refers to deleting at least one of information on the digital key stored in a device and information on the digital key stored in the vehicle. When a digital key is deleted, the vehicle is not controllable using the digital key.

A first device requests to delete the digital key from a second device. Then, when the digital key deletion request is received by at least one of the second device and the vehicle, the digital key is deleted. However, when both the second device and the vehicle are offline, the digital key is not deleted even when the first device requests to delete the digital key from the second device.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In an aspect of the present disclosure, a management system includes a vehicle, multiple devices, and a management server. The vehicle is configured to store first key-related information related to each of digital keys. Each of the devices is configured to store second key-related information related to at least one of the digital keys. The management server is configured to manage registration of the digital keys to the vehicle. Each digital key of the digital keys is configured to control the vehicle when the first key-related information related to the digital key is stored in the vehicle and the second key-related information related to the digital key is stored in one of the devices. In response to a request to delete a target digital key, the target digital key being one of the digital keys that is a target of deletion, the management system is configured to transmit a deletion request to a target device storing second target key-related information, thereby deleting the second target key-related information from the target device. The second target key-related information is the second key-related information related to the target digital key. The management system is configured to transmit the deletion request to the vehicle, thereby deleting first target key-related information from the vehicle. The first target key-related information is the first key-related information related to the target digital key. When transmitting the deletion request, if both the target device and the vehicle are in a non-communicable state, the management system is further configured to retransmit the deletion request when at least one of the target device and the vehicle is restored to a communicable state.

In an aspect of the present disclosure, a management server, in a management system including a vehicle and multiple devices, is configured to manage registration of multiple digital keys to the vehicle. The vehicle is configured to store first key-related information related to each of the digital keys. Each of the devices is configured to store second key-related information related to at least one of the digital keys. Each digital key of the digital keys is configured to control the vehicle when the first key-related information related to the digital key is stored in the vehicle and the second key-related information related to the digital key is stored in one of the devices. In response to a request to delete a target digital key, the target digital key being one of the digital keys that is a target of deletion, the management server is configured to transmit a deletion request to a target device storing second target key-related information, thereby deleting the second target key-related information from the target device, the second target key-related information being the second key-related information related to the target digital key, and transmit the deletion request to the vehicle, thereby deleting first target key-related information from the vehicle. The first target key-related information is the first key-related information related to the target digital key. When transmitting the deletion request, if both the target device and the vehicle are in a non-communicable state, the management server is further configured to retransmit the deletion request when at least one of the target device and the vehicle is restored to a communicable state.

In an aspect of the present disclosure, a deletion program is configured to control a management server in a management system. The management system includes a vehicle and multiple devices. The vehicle is configured to store first key-related information related to each of digital keys. Each of the devices is configured to store second key-related information related to at least one of the digital keys. The management server is configured to manage registration of the digital keys to the vehicle. Each digital key of the digital keys is configured to control the vehicle when the first key-related information related to the digital key is stored in the vehicle and the second key-related information related to the digital key is stored in one of the devices. In response to a request to delete a target digital key, the target digital key being one of the digital keys that is a target of deletion, the deletion program is configured to cause the management server to transmit a deletion request to a target device storing second target key-related information, thereby deleting the second target key-related information from the target device, the second target key-related information being the second key-related information related to the target digital key, and transmit the deletion request to the vehicle, thereby deleting first target key-related information from the vehicle, the first target key-related information being the first key-related information related to the target digital key. When transmitting the deletion request, if both the target device and the vehicle are in a non-communicable state, the deletion program is further configured to cause the management server to retransmit the deletion request when at least one of the target device and the vehicle is restored to a communicable state.

In an aspect of the present disclosure, a deletion method is for deleting a target digital key. The target digital key is one of multiple digital keys used in a management system and is a target of deletion. The management system includes a vehicle, multiple devices, and a management server. The vehicle is configured to store first key-related information related to each of the digital keys. Each of the devices is configured to store second key-related information related to at least one of the digital keys. The management server is configured to manage registration of the digital keys to the vehicle. Each digital key of the digital keys is configured to control the vehicle when the first key-related information related to the digital key is stored in the vehicle and the second key-related information related to the digital key is stored in one of the devices. The deletion method includes transmitting, with the management server, a deletion request to a target device storing second target key-related information, thereby deleting the second target key-related information from the target device, the second target key-related information being the second key-related information related to the target digital key; and transmitting, with the management server, the deletion request to the vehicle, thereby deleting first target key-related information from the vehicle, the first target key-related information being the first key-related information related to the target digital key. When transmitting the deletion request, if both the target device and the vehicle are in a non-communicable state, the deletion method further includes retransmitting, with the management server, the deletion request when at least one of the target device and the vehicle is restored to a communicable state.

Other features and aspects will be apparent from the following detailed description, the drawings, and the claims.

### BRIEF DESCRIPTION OF THE DRAWINGS

Fig. 1 is a schematic diagram showing a management system in accordance with an embodiment.
Fig. 2 is a schematic diagram showing owner key information stored in an owner device shown in Fig. 1.
Fig. 3 is a schematic diagram showing shareable key information stored in a shareable device shown in Fig. 1.
Fig. 4 is a schematic diagram showing data in a database shown in Fig. 1.
Fig. 5 is an explanatory diagram showing a series of processes executed by a management system shown in Fig. 1 when an owner key is registered.
Fig. 6 is an explanatory diagram showing a series of processes executed by the management system of Fig. 1 when a friend key is registered.
Fig. 7 is an explanatory diagram showing a series of processes executed by the management system of Fig. 1 when a guest key is registered.
Fig. 8 is an explanatory diagram showing a series of processes executed by the management system of Fig. 1 when a guest key is deleted in response to a request from a friend device.
Fig. 9 is an explanatory diagram showing a series of processes executed by the management system of Fig. 1 when a guest key is deleted in response to a request from a guest device.
Fig. 10 is an explanatory diagram showing a series of processes executed by the management system of Fig. 1 when a friend key is deleted in response to a request from an owner device.
Fig. 11 is an explanatory diagram showing a series of processes executed by the management system of Fig. 1 when a friend key is deleted in response to a request from a friend device.
Fig. 12 is an explanatory diagram showing a series of processes executed by the management system of Fig. 1 when a guest device and a vehicle are in a non-communicable state.
Fig. 13 is an explanatory diagram showing a series of processes executed by the management system of Fig. 1 to delete a guest key when a guest device and a vehicle are in a non-communicable state.
Fig. 14 is a flowchart illustrating a series of processes executed when the guest device shown in Fig. 1 receives a deletion request.
Fig. 15 is a flowchart illustrating a series of processes executed when the vehicle shown in Fig. 1 receives a deletion request.
Fig. 16 is an explanatory diagram showing a series of processes executed by the management system of Fig. 1 when a friend device and a vehicle are in a non-communicable state.
Fig. 17 is an explanatory diagram showing a series of processes executed by the management system of Fig. 1 to delete a friend key when a friend device and a vehicle are in a non-communicable state.
Fig. 18 is a flowchart illustrating a series of processes executed when the friend device shown in Fig. 1 receives a deletion request.
Fig. 19 is an explanatory diagram showing a series of processes executed by a modified example of a management system to delete a guest key when a guest device and a vehicle are in a non-communicable state.
Fig. 20 is an explanatory diagram showing a series of processes executed by a modified example of a management system to delete a friend key when a friend device and a vehicle are in a non-communicable state.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

An embodiment of a management system will be described with reference to the drawings.

### Overview of Management System 10

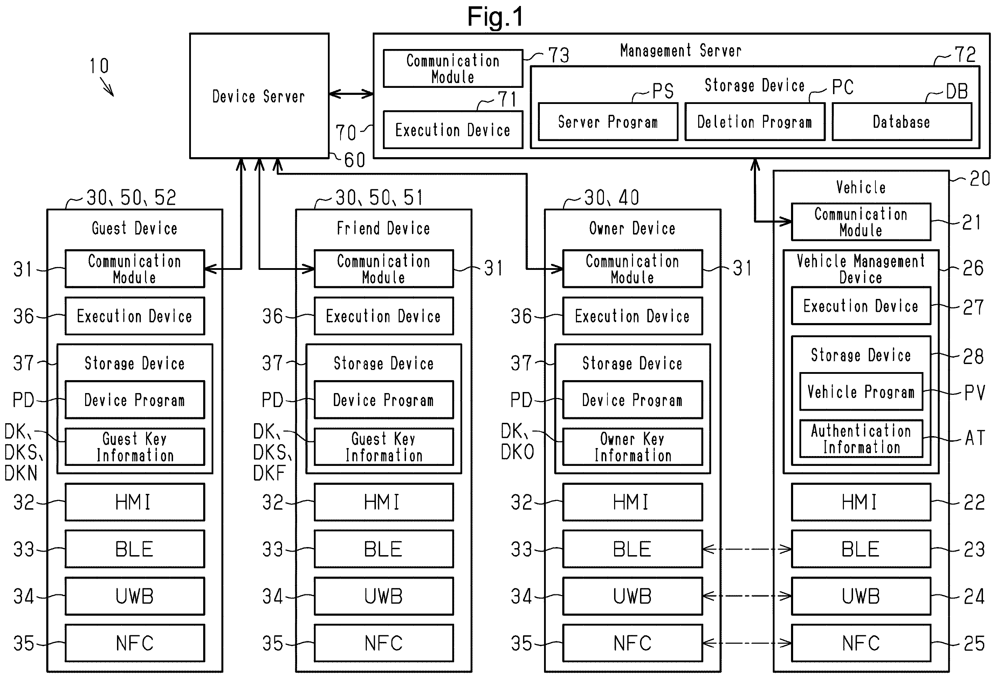

As shown in Fig. 1, a management system 10 manages multiple digital keys that may be used for a vehicle 20. Standards for digital keys have been established by the Car Connectivity Consortium^{™} (CCC). The digital key functionality in the present embodiment conforms to the standards established by the CCC. The management system 10 includes the vehicle 20, multiple devices 30, a device server 60, and a management server 70.

The vehicle 20 includes a communication module 21, an HMI 22, a BLE module 23, a UWB module 24, an NFC module 25, and a vehicle management device 26. HMI is the abbreviation of Human Machine Interface. BLE is the abbreviation of Bluetooth Low Energy. UWB is the abbreviation of Ultra Wide Band. NFC is the abbreviation of Near Field Communication.

The communication module 21 communicates with the management server 70 via a wireless communication network. The HMI 22 includes an input device, which accepts input operations performed by the user of the vehicle 20, and an output device, which presents information to the user. The output device is, for example, a monitor and a speaker.

The BLE module 23 performs short-range wireless communication with the devices 30 via BLE communication. One or more UWB modules 24 communicate with the devices 30 via UWB communication. The one or more UWB modules 24 measure the distances between the devices 30 and the vehicle 20. The NFC module 25 performs short-range wireless communication with the devices 30 via NFC communication.

The vehicle management device 26 is mounted on the vehicle 20. The vehicle management device 26 manages the digital keys of the vehicle 20. The vehicle management device 26 is, for example, a digital key ECU. The vehicle management device 26 includes an execution device 27, which is processing circuitry, and a storage device 28. The storage device 28 stores a vehicle program PV and authentication information AT. The vehicle program PV is executed by the execution device 27 to cause the execution device 27 to store and delete the authentication information AT. The authentication information AT relates to a digital key and is referred to as first key-related information. The authentication information AT is used to authenticate a digital key so that the digital key is allowed to control the vehicle 20 when the digital key is used. The authentication information AT is provided for each digital key to be authenticated. The execution device 27 is a CPU. The execution device 27 executes the vehicle program PV to execute processes related to storage and deletion of the authentication information AT.

When authenticating a digital key, the vehicle management device 26 determines whether the vehicle 20 is validly controllable using the digital key. When the vehicle management device 26 determines that the vehicle 20 is validly controllable using the digital key, authentication of the digital key is completed.

Subsequent to the completion of authentication of the digital key, the vehicle management device 26 allows for control of the vehicle 20 using the digital key. While the authentication is in the completion state, the digital key is allowed to control the vehicle 20. In an example, when the vehicle management device 26 authenticates the digital key, the vehicle management device 26 enables unlocking of the vehicle 20. In another example, when the vehicle management device 26 authenticates the digital key, the vehicle management device 26 enables starting of the vehicle 20.

When the device 30 is separated from the vehicle 20 by at least a certain distance, the completion state of the authentication of the digital key registered for the device 30 is cancelled. The device 30 and the vehicle 20 recognize whether the authentication of the digital key is in the completion state.

Each device 30 is a portable information terminal such as a smartphone. The device 30 includes a communication module 31, an HMI 32, a BLE module 33, a UWB module 34, an NFC module 35, an execution device 36, which is processing circuitry, and a storage device 37.

The communication module 31 communicates with the device server 60 via a wireless communication line. The HMI 32 includes an input device, which accepts input operations performed by the user of the device 30, and an output device, which presents information to the user. The output device is, for example, a monitor and a speaker.

The BLE module 33 performs short-range wireless communication with the vehicle 20 via BLE communication. The UWB module 34 communicates with the vehicle 20 via UWB communication. The NFC module 35 performs short-range wireless communication with the vehicle 20 via NFC communication.

The storage device 37 stores a device program PD and key information DK. The device program PD is executed by the execution device 36 to cause the execution device 36 to store and delete the key information DK. The key information DK indicates a digital key. The key information DK relates to a digital key and is referred to as second key-related information.

The device program PD includes, for example, a device application and a digital key framework. The device application is an application for storing and deleting the key information DK. The digital key framework is a program that provides functions of pairing of the devices 30 and sharing of digital keys by using an API prepared in the OS. The execution device 36 executes the device program PD to execute processes related to storage and deletion of the key information DK.

The multiple devices 30 include an owner device 40 and shareable devices 50. The owner device 40 stores owner key information DKO indicating the owner key KO as the key information DK. Only one owner key KO is allowed to be registered to a single vehicle 20. Therefore, there is only one owner key KO for each vehicle 20. The owner device 40 belongs to the owner of a vehicle 20.

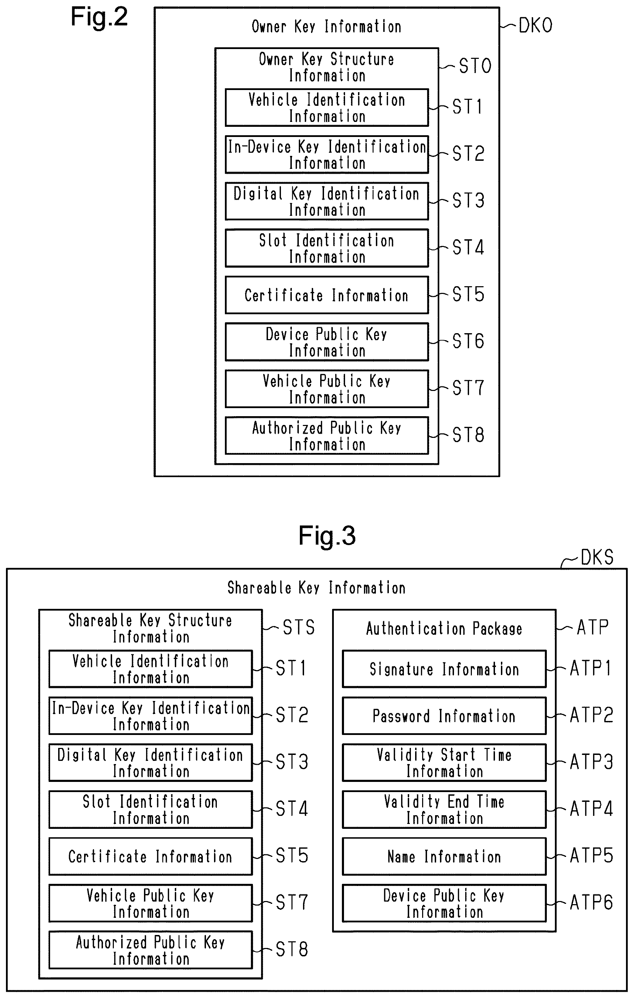

As shown in Fig. 2, the owner key information DKO includes owner key structure information STO. The owner key structure information STO includes vehicle identification information ST1, in-device key identification information ST2, digital key identification information ST3, and slot identification information ST4. The owner key structure information STO further includes certificate information ST5, device public key information ST6, vehicle public key information ST7, and authorized public key information ST8.

The vehicle identification information ST1 is used to identify the vehicle 20 for which digital keys are assigned. The vehicle identification information ST1 is, for example, an ID of the vehicle 20.

The in-device key identification information ST2 is used for management of digital keys in the device 30. The in-device key identification information ST2 is used to identify digital keys in the application of the device 30.

The digital key identification information ST3 is used for management of digital keys in the management server 70. The slot identification information ST4 is used to identify digital keys locally within the devices 30.

The certificate information ST5 indicates a certificate that authenticates digital keys. The device public key information ST6 indicates a device public key PKD, which is a public key of the device 30. The device public key PKD in the owner key information DKO indicates the public key of the owner device 40. The vehicle public key information ST7 indicates an in-vehicle public key PKV, which is a public key of the vehicle 20. The authorized public key information ST8 indicates the vehicle public key PKV that has been permitted.

As shown in Fig. 1, the shareable devices 50 each store shareable key information DKS indicating a shareable key KS as the key information DK. The shareable devices 50 are devices 30 that are separate from the owner device 40. Multiple shareable keys KS can be registered to one vehicle 20 when digital keys are registered so as to be usable. That is, multiple shareable keys KS may be associated with a single vehicle 20.

The shareable devices 50 include friend devices 51 and guest devices 52. The friend device 51 stores friend key information DKF indicating a friend key KF as the shareable key information DKS. The guest device 52 stores guest key information DKN indicating a guest key KN as the shareable key information DKS. That is, the types of the shareable keys KS include the friend key KF and the guest key KN. The friend key KF is a shareable key KS that has been registered based on a direct registration request D21 from the owner device 40, as described later. The guest key KN is a shareable key KS that has been registered based on a registration request D31 from a friend device 51, as described later. In other words, the guest key KN is a shareable key KS that has been registered based on a registration request D31 from another device 30, rather than a direct registration request D21 from the owner device 40. The guest key KN refers to a shareable key KS that is not a friend key KF among the shareable keys KS.

A state in which the digital key is registered refers to a state in which the digital key is available for use. More specifically, in the state in which the digital key is registered, the vehicle 20 stores the authentication information AT, and the device 30 stores the key information DK. In the state in which the digital key is registered, the digital key is allowed to control the vehicle 20.

As shown in Fig. 3, the shareable key information DKS includes shareable key structure information STS and an authentication package ATP. The shareable key structure information STS includes vehicle identification information ST1, in-device key identification information ST2, digital key identification information ST3, and slot identification information ST4. The shareable key structure information STS includes certificate information ST5, vehicle public key information ST7, and authorized public key information ST8. In other words, the shareable key structure information STS is obtained by removing the device public key information ST6 from the owner key structure information STO.

The authentication package ATP includes signature information ATP1, password information ATP2, validity start time information ATP3, validity end time information ATP4, name information ATP5, and device public key information ATP6.

The signature information ATP1 indicates that the shareable device 50 is an authorized entity for receiving the digital key. For example, in the case of the friend device 51, the signature information ATP1 indicates a signature by the owner device 40. The owner signature information indicates that the owner device 40 has signed the device public key PKD of the friend device 51, which is indicated by the device public key information ATP6. Further, for example, in the case of the guest device 52, the signature information ATP1 indicates a signature by the friend device 51. The friend signature information indicates that the friend device 51 has signed the device public key PKD of the guest device 52, which is indicated by the device public key information ATP6.

The password information ATP2 indicates a pairing password PAS used to establish a secure channel during the pairing between the vehicle 20 and the owner device 40. The validity start time information ATP3 indicates the earliest date and time at which the shareable key KS becomes valid for use. The validity end time information ATP4 indicates the latest date and time until which the shareable key KS remains valid for use. The name information ATP5 indicates a name for identifying the shareable key KS. The name information ATP5 is set to an identifiable name for each of the shareable devices 50, for example, by an operation from the owner device 40.

As shown in Fig. 1, the device server 60 relays communication between the devices 30 and the management server 70. Fig. 1 shows only one device server 60. However, the device server 60 is provided for each type of the devices 30. That is, the device server 60 used for communication with a first type of device 30 may differ from the device server 60 used for communication with a second type of device 30. For example, the type may refer to the model of the device 30, and a separate device server 60 may be provided for each model of the device 30. In another example, the type may refer to the communication line used by the device 30, and a separate device server 60 may be provided for each type of communication line.

Each of the device servers 60 relays communication between the corresponding device 30 and the management server 70. The devices 30 of different types are each configured to communicate with the management server 70 via the corresponding device server 60.

### Management Server 70

The management server 70 is configured to manage registration of digital keys. The management server 70 is configured to communicate with the vehicle 20 and multiple devices 30. The management server 70 includes an execution device 71, which is processing circuitry, a storage device 72, and a communication module 73. The communication module 73 communicates with the device server 60 via a wireless communication line. Further, the communication module 73 is configured to wirelessly communicate with the communication module 21 of the vehicle 20.

The storage device 72 stores a server program PS, a deletion program PC, and a database DB. The server program PS is executed by the execution device 71 to cause the execution device 71 to register digital keys to the database DB and delete digital keys from the database DB. The deletion program PC is executed by the execution device 71 to cause the execution device 71 to delete digital keys. The deletion program PC causes the execution device 71 to execute the deletion method described below.

The database DB includes information in which, for each of the digital keys, the corresponding vehicle 20 is associated with a registered device 30. The data DA included in the database DB is partitioned for each vehicle 20. In a state in which a digital key is registered, the management server 70 stores information, as the data DA, indicating a device 30 that stores key information DK indicating the digital key. The management server 70 manages digital keys by storing the data DA in the database DB.

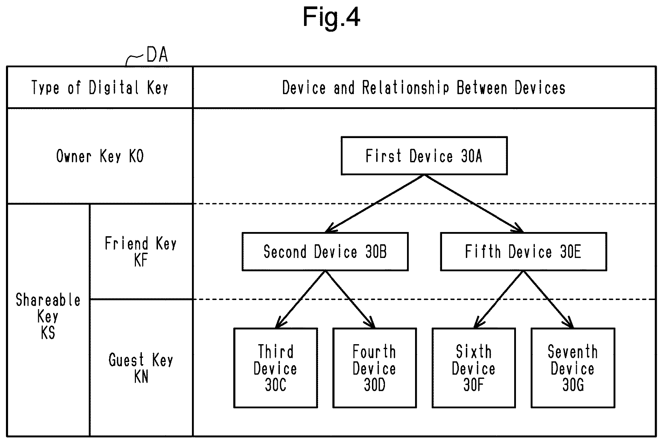

As shown in Fig. 4, data DA on a vehicle 20 includes information related to the types of digital keys registered to the vehicle 20, the registered devices 30, and the relationship between the registered devices 30. The digital keys are categorized into multiple hierarchical levels according to their respective types. From highest to lowest in the hierarchy, the digital keys are ordered as the owner key KO, the friend key KF, and the guest key KN. Digital keys at higher hierarchical levels are assigned greater authority.

Authority includes, for example, the number of shareable keys KS that may be requested for registration, and the scope of control over the vehicle 20 enabled through authentication of the digital key. Digital keys at higher hierarchical levels are permitted to request registration of a greater number of shareable keys KS. Specifically, for example, the number of friend keys KF that an owner device 40 is permitted to request for registration is greater than the number of guest keys KN that a friend device 51 is permitted to request for registration.

Further, as the hierarchical level of a digital key increases, the scope of control permitted over the vehicle 20 also increases. The control scope over the vehicle 20 refers to the set of controllable functions, such as engine start control of the vehicle 20, power-on control of the vehicle 20, and door unlocking and locking control of the vehicle 20. For example, when the control scope includes all three of the above functions, the control scope is broader than when it includes only door unlocking and locking control of the vehicle 20. Specifically, the control scope of the vehicle 20 permitted by the friend key KF includes all three functions described above, whereas the control scope permitted by the guest key KN is limited to only the door unlocking and locking control of the vehicle 20.

A state in which digital keys are registered to seven devices 30 for one vehicle 20 will now be described. The seven devices 30 are first through seventh devices 30A to 30G. The digital keys respectively registered to the first device 30A to the seventh device 30G are a first key through a seventh key.

The device 30 to which the owner key KO is registered as a digital key is the first device 30A. In other words, the first device 30A is the owner device 40. Accordingly, the first digital key is the owner key KO.

The devices 30 to which the shareable keys KS are registered as digital keys are the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are the shareable devices 50. Accordingly, the second key through the seventh key are all shareable keys KS.

Specifically, the devices 30 to which the friend key KF is registered as the shareable key KS are the second device 30B and the fifth device 30E. In other words, the second device 30B and the fifth device 30E are the friend devices 51. The devices 30 to which the guest key KN is registered as the shareable key KS are the third device 30C, the fourth device 30D, the sixth device 30F, and the seventh device 30G. In other words, the third device 30C, the fourth device 30D, the sixth device 30F, and the seventh device 30G are the guest devices 52.

The relationship between the registered devices 30 included in the data DA will now be described. The relationship between the second device 30B and the first device 30A is such that the friend key KF has been registered to the second device 30B in response to a registration request from the first device 30A. In other words, the second digital key is registered based on the first digital key.

The relationship between the fifth device 30E and the first device 30A is such that the friend key KF has been registered to the fifth device 30E in response to a registration request from the first device 30A. In other words, the fifth digital key is registered based on the first digital key.

The relationship between the third device 30C and the second device 30B is such that the guest key KN has been registered to the third device 30C in response to a registration request from the second device 30B. In other words, the third digital key is registered based on the second digital key.

The relationship between the fourth device 30D and the second device 30B is such that the guest key KN has been registered to the fourth device 30D in response to the registration request from the second device 30B. In other words, the fourth digital key is registered based on the second digital key.

The relationship between the sixth device 30F and the fifth device 30E is such that the guest key KN has been registered to the sixth device 30F in response to a registration request from the fifth device 30E. In other words, the sixth digital key is registered based on the fifth digital key.

The relationship between the seventh device 30G and the fifth device 30E is such that the guest key KN has been registered to the seventh device 30G in response to a registration request from the fifth device 30E. In other words, the seventh digital key is registered based on the fifth digital key.

As described above, the data DA includes information related to the devices 30 to which the digital keys have been registered. In the data DA, each registered device 30 is associated with information indicating the device 30 that initiated the registration request. The data DA also includes information indicating the digital key on which the registration of each digital key is based.

### Registration of Digital Keys

Next, a series of processes for registering digital keys to the management system 10 will be described. The registration of digital keys includes the registration of the owner key KO, the registration of the friend key KF, and the registration of the guest key KN. The following description explains the overall process from a state in which no digital key is registered to a state in which digital keys are registered. In the following description, processes executed by the execution device 27 are described as processes executed by the vehicle 20. The processes executed by the execution device 36 will be described as processes executed by the device 30. The processes executed by the execution device 71 will be described as processes executed by the management server 70.

### Registration of the Owner Key KO

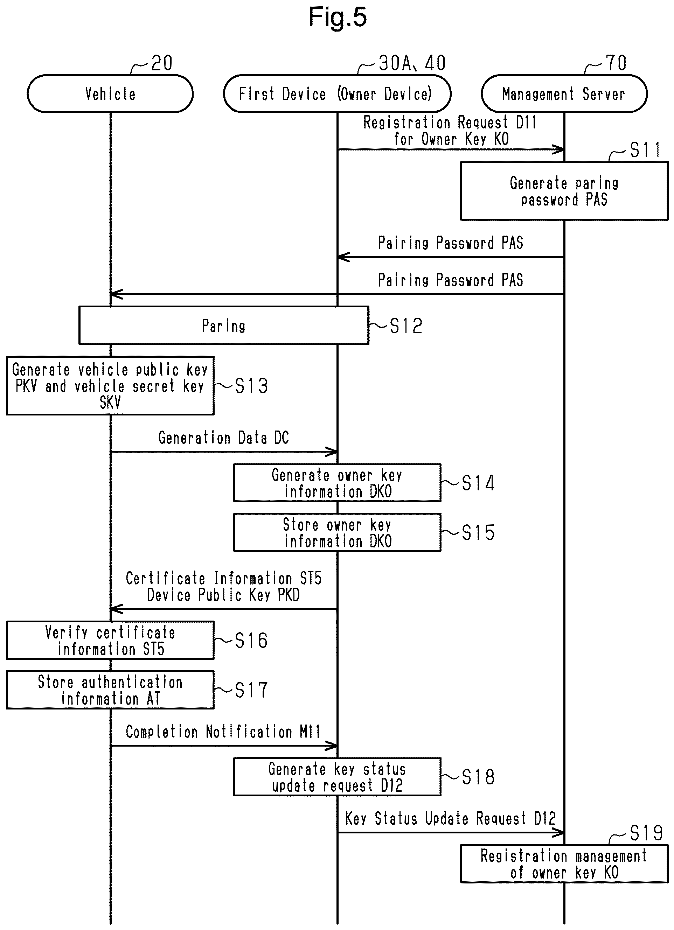

As shown in Fig. 5, the management system 10 executes a series of processes in order to register the owner key KO. The following describes an example of registering the owner key KO to the first device 30A, which does not store the key information DK that indicates the owner key KO.

The management system 10 stores the key information DK indicating the owner key KO in the first device 30A through the registration of the owner key KO. The management system 10 causes the vehicle 20 to store the authentication information AT for authenticating the owner key KO through the registration of the owner key KO. Thus, the first device 30A is configured as the owner device 40. Prior to the registration of the owner key KO, an application required for the registration is installed on the first device 30A.

Upon receiving a registration request D11 for the owner key KO from the first device 30A or the like, the management server 70 executes the process of step S11. In step S11, the management server 70 generates a pairing password PAS. The management server 70 then transmits information indicating the pairing password PAS to the vehicle 20 and the first device 30A.

The vehicle 20 receives the pairing password PAS. After receiving the pairing password PAS, the vehicle 20 is set to a pairing mode via the HMI 22. The vehicle 20 then stands by in a state in which the vehicle 20 can receive the password from the first device 30A. Then, the vehicle 20 proceeds to step S12.

In step S12, the vehicle 20 performs pairing with the first device 30A. When the pairing is performed, the vehicle 20 establishes a secure channel for data transmission with the first device 30A. The pairing is performed using the pairing password PAS transmitted from the management server 70 to the vehicle 20 and the first device 30A. When the pairing is completed, the vehicle 20 advances the process to step S13.

In step S13, the vehicle 20 generates a vehicle public key PKV, which is a public key of the vehicle 20, and a vehicle secret key SKV, which is a secret key of the vehicle 20. Thereafter, the vehicle 20 transmits generation data DC for generating the owner key KO to the first device 30A via the secure channel. The generation data DC includes the vehicle identification information ST1 and the vehicle public key information indicating the vehicle public key PKV. The first device 30A receives the generation data DC. Thereafter, the first device 30A advances the process to step S14.

In step S14, the first device 30A generates owner key information DKO indicating the owner key KO. Thereafter, the first device 30A advances the process to step S15.

In step S15, the first device 30A stores the owner key information DKO. As a result, the first device 30A is configured as the owner device 40. Subsequently, the first device 30A transmits, to the vehicle 20, the certificate information ST5 related to the owner key KO and the device public key information ST6 indicating the device public key PKD.

Upon receiving the certificate information ST5 and the device public key information ST6, the vehicle 20 executes the process of step S16. In step S16, the vehicle 20 verifies the certificate information ST5. When the verification of the certificate information ST5 is completed, the vehicle 20 advances the process to step S17.

In step S17, the vehicle 20 stores the device public key information ST6 indicating the device public key PKD as the authentication information AT. Subsequently, the vehicle 20 transmits a completion notification M11 to the first device 30A, indicating that the storage of the authentication data AT has been completed.

Thereafter, upon receiving the completion notification M11, the first device 30A executes the process of step S18. In step S18, the first device 30A generates a key status update request D12 for the owner key KO. The key status update request D12 is a signal for requesting the management server 70 to update the database DB. The first device 30A then transmits the key status update request D12 for the owner key KO to the management server 70 via the device server 60.

Upon receiving the key status update request D12, the management server 70 executes the process of step S19. In step S19, the management server 70 performs registration management of the owner key KO. Specifically, the management server 70 stores the data DA of the vehicle 20, indicating that the device 30 to which the owner key KO is registered is the first device 30A, in the database DB. The management system 10 then terminates the series of processes for registering the owner key KO.

### Registration of the Friend Key KF

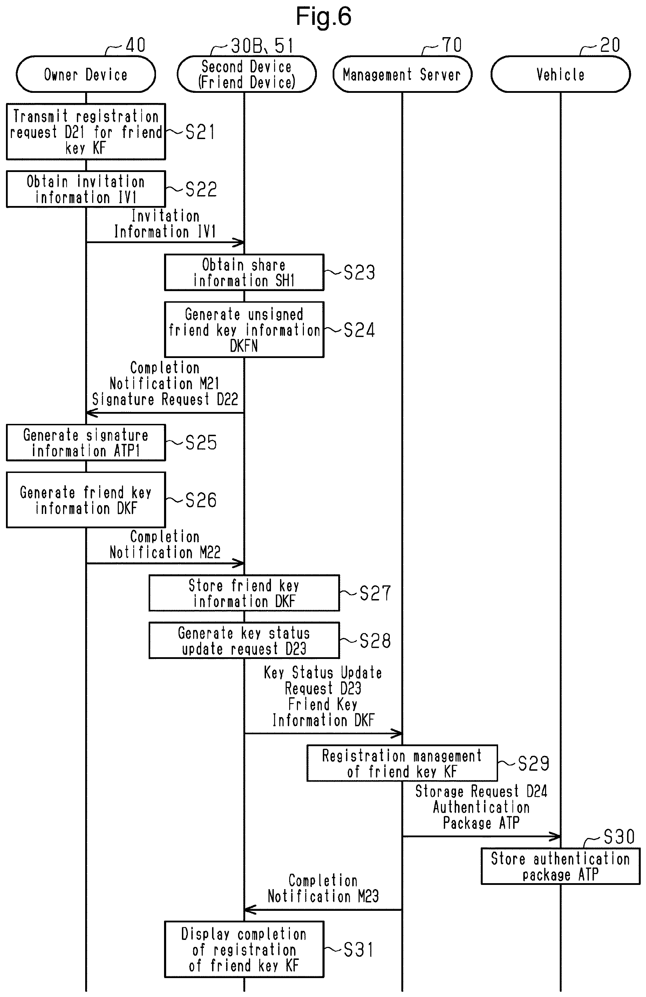

As shown in Fig. 6, the management system 10 executes a series of processes in order to register the friend key KF. The following describes an example of registering the friend key KF to the second device 30B, which does not store the friend key information DKF, through a series of processes.

When an operation for requesting the registration of the friend key KF is performed on the owner device 40, the owner device 40 first executes the process of step S21. In step S21, the owner device 40 transmits a registration request D21 for the friend key KF to a relay server (not shown). Thereafter, the owner device 40 advances the process to step S22.

In step S22, the owner device 40 obtains invitation information IV1 for sharing a digital key from the relay server. The invitation information IV1 is, for example, a URL link. The URL link contains share information SH1 necessary to share the digital key. Thereafter, the owner device 40 transmits the invitation information IV1 to the second device 30B.

Upon receiving the invitation information IV1, the second device 30B executes the process of step S23. In step S23, the second device 30B obtains the share information SH1 based on the invitation information IV1. Specifically, the second device 30B downloads the share information SH1 from the source of the URL link.

The share information SH1 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the owner device 40. Thereafter, the second device 30B advances the process to step S24.

In step S24, the second device 30B generates unsigned friend key information DKFN by using the share information SH1. The unsigned friend key information DKFN is friend key information DKF that does not have the signature information ATP1. The unsigned friend key information DKFN includes the obtained share information SH1. Thereafter, the second device 30B transmits a completion notification M21 to the owner device 40, indicating that the upload of the generated unsigned friend key information DKFN to the URL link has been completed. The second device 30B also transmits a signature request D22 to the owner device 40.

The owner device 40 receives the completion notification M21 and the signature request D22 from the second device 30B. Upon receiving the completion notification M21, the owner device 40 obtains the unsigned friend key information DKFN. When the owner device 40 receives the signature request D22, the owner device 40 is operated to execute the process of step S25.

In step S25, the owner device 40 generates the signature information ATP1. Specifically, the owner device 40 causes the HMI 32 to present the unsigned friend key information DKFN that has been obtained, and accepts an operation indicating that the user of the owner device 40 has agreed to the registration of the friend key KF. Upon receiving the operation, the owner device 40 generates the signature information ATP1 based on the operation. The owner device 40 then advances the process to step S26.

In step S26, the owner device 40 adds the signature information ATP1 to the unsigned friend key information DKFN. The owner device 40 thus generates the friend key information DKF. Thereafter, the owner device 40 uploads the generated friend key information DKF to the URL link, which is the invitation information IV1. Then, the owner device 40 transmits, to the second device 30B, a completion notification M22 indicating that uploading of the completed friend key information DKF to the URL link has been completed.

The second device 30B receives the completion notification M22. Then, the second device 30B executes the process of step S27. In step S27, the second device 30B downloads and stores the friend key information DKF. Thus, the second device 30B is configured as the friend device 51. Thereafter, the second device 30B advances the process to step S28.

In step S28, the second device 30B generates a key status update request D23 for the friend key KF. The second device 30B then transmits, to the management server 70, the friend key information DKF and the key status update request D23 for the friend key KF.

Upon receiving the key status update request D23 for the friend key KF, the management server 70 executes the process of step S29. In step S29, the management server 70 performs registration management of the friend key KF.

Specifically, the management server 70 verifies that the friend key KF, which is the target of the key status update request D23, is not listed in a revocation list. The revocation list is a list indicating shareable keys KS, including friend keys KF and guest keys KN, for which deletion requests have already been received. If the friend key KF is listed in the revocation list, the management server 70 transmits a notification to the second device 30B indicating that it cannot respond to the key status update request D23.

When the friend key KF for which the key status update request D23 has been received is not listed in the revocation list, the management server 70 registers the friend key KF for which the key status update request D23 has been received to the database DB. Specifically, the management server 70 stores the data DA of the vehicle 20, indicating that the device 30 registered as the friend device 51 is the second device 30B, in the database DB. The management server 70 stores the relationship between the second device 30B and the owner device 40 by referencing the obtained friend key information DKF.

Subsequently, the management server 70 transmits, to the vehicle 20, the authentication package ATP, which is part of the friend key information DKF, along with a storage request D24, which requests the storage of the authentication package ATP. That is, the management server 70 transmits the device public key information ST6, which indicates the device public key PKD of the friend device 51, to the vehicle 20. The management server 70 notifies the vehicle 20 that the device public key PKD has been signed by the owner device 40.

Thereafter, upon receiving the storage request D24 and the authentication package ATP from the management server 70, the vehicle 20 executes the process of step S30. In step S30, the vehicle 20 stores the received authentication package ATP as the authentication information AT for authenticating the friend key KF.

After completing the registration management, the management server 70 transmits a completion notification M23 of the key status update to the second device 30B.

Upon receiving the completion notification M23 of the key status update, the second device 30B executes the process of step S31. In the process of step S31, the second device 30B presents information indicating the completion of the registration of the friend key KF on the HMI 32. For example, the second device 30B displays an image indicating the completion of the registration of the friend key KF on the HMI 32. As a result, the management system 10 terminates the series of processes for registering the friend key KF.

### Registration of the Guest Key KN

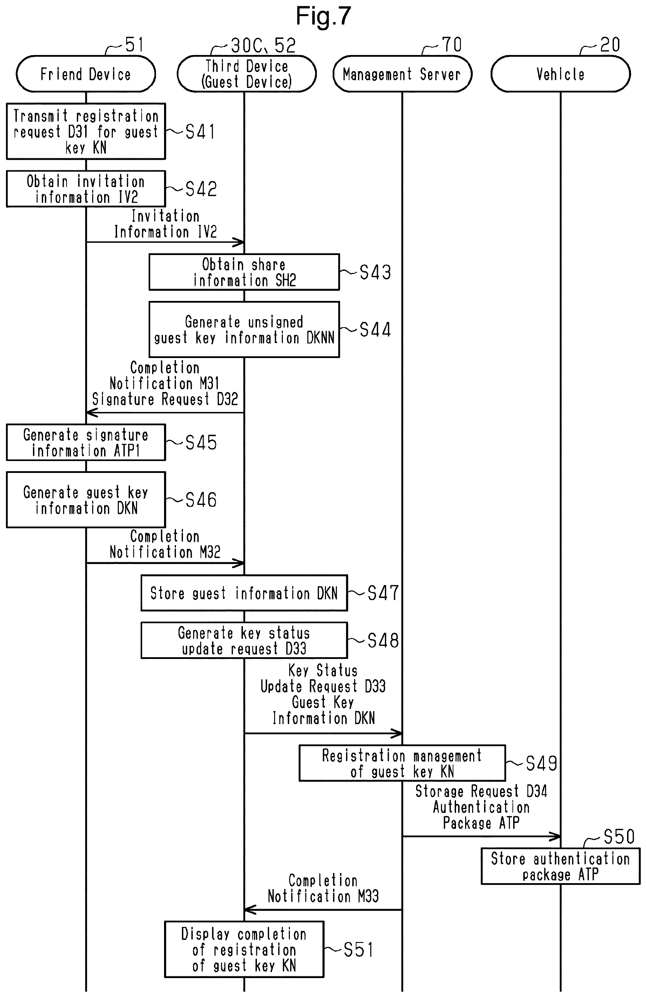

As shown in Fig. 7, the management system 10 executes a series of processes in order to register the guest key KN. The following describes an example of registering the guest key KF to the third device 30C, which does not store the guest key information DKN, through a series of processes.

When an operation for requesting the registration of the guest key KN is performed on the friend device 51, the friend device 51 first executes the process of step S41. In step S41, the friend device 51 transmits a registration request D31 for the guest key KN to the relay server (not shown). Thereafter, the friend device 51 advances the process to step S42.

In step S42, the friend device 51 obtains invitation information IV2 for sharing a digital key from the relay server. The invitation information IV2 is, for example, a URL link. The URL link contains share information SH2 necessary to share the digital key. Thereafter, the friend device 51 transmits the invitation information IV2 to the third device 30C.

Upon receiving the invitation information IV2, the third device 30C executes the process of step S43. In step S43, the third device 30C obtains the share information SH2 based on the invitation information IV2. Specifically, the third device 30C downloads the share information SH2 from the URL link.

The share information SH2 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the friend device 51. Thereafter, the third device 30C advances the process to step S44.

In step S44, the third device 30C generates unsigned guest key information DKNN using the share information SH2. The unsigned guest key information DKNN is guest key information DKN that does not have the signature information ATP1. The unsigned guest key information DKNN includes the obtained share information SH2. Subsequently, the third device 30C transmits a completion notification M31 to the friend device 51, indicating that the upload of the generated unsigned guest key information DKNN to the URL link has been completed. The third device 30C also transmits a signature request D32 to the friend device 51.

Subsequently, the friend device 51 receives the completion notification M31 and the signature request D32 from the third device 30C. Upon receiving the completion notification M31, the friend device 51 obtains the unsigned guest key information DKNN. Upon receiving the signature request D32, the friend device 51 is operated to execute the process of step S45.

In step S45, the friend device 51 generates the signature information ATP1. Specifically, the friend device 51 causes the HMI 32 to present the unsigned guest key information DKNN that has been obtained, and accepts an operation indicating that the user of the friend device 51 has agreed to the registration of the guest key KN. Upon receiving the operation, the friend device 51 generates the signature information ATP1 based on the operation. Thereafter, the friend device 51 advances the process to step S46.

In step S46, the friend device 51 adds the signature information ATP1 to the unsigned guest key information DKNN. The friend device 51 thus generates the guest key information DKN. Thereafter, the friend device 51 uploads the generated guest key information DKN to the URL link, which is the invitation information IV2. Then, the friend device 51 transmits, to the third device 30C, a completion notification M32 indicating that uploading of the completed guest key information DKN to the URL link has been completed.

Thereafter, the third device 30C receives the completion notification M32. Then, the third device 30C executes the process of step S47. In step S47, the third device 30C downloads and stores the guest key information DKN. As a result, the third device 30C is configured as the guest device 52. Thereafter, the third device 30C advances the process to step S48.

In step S48, the third device 30C generates a key status update request D33 for the guest key KN. The third device 30C transmits the guest key information DKN and the key status update request D33 for the guest key KN to the management server 70.

Upon receiving the key status update request D33 for the guest key KN, the management server 70 executes the process of step S49. In step S49, the management server 70 performs registration management of the guest key KN.

Specifically, the management server 70 verifies that the guest key KN, which is the target of the key status update request D33, is not listed in the revocation list. If the guest key KN is listed in the revocation list, the management server 70 transmits a notification to the third device 30C indicating that it cannot respond to the key status update request D33.

When the guest key KN is not listed in the revocation list, the management server 70 registers the guest key KN, which is the target of the key status update request D33, to the database DB. Specifically, the management server 70 stores the data DA of the vehicle 20, indicating that the device 30 registered as the guest device 52 is the third device 30C, in the database DB. The management server 70 stores the relationship between the third device 30C and the friend device 51 by referencing the obtained guest key information DKN. Specifically, the management server 70 stores data indicating that the third device 30C is the device 30 having the guest key KN registered in response to the registration request D31 from the friend device 51.

Subsequently, the management server 70 transmits, to the vehicle 20, the authentication package ATP, which is part of the guest key information DKN, along with a storage request D34, which requests the storage of the authentication package ATP. That is, the management server 70 transmits the device public key information ST6, which indicates the device public key PKD of the guest device 52, to the vehicle 20. The management server 70 notifies the vehicle 20 that the device public key PKD has been signed by the friend device 51.

Upon receiving the authentication package ATP and the storage request D34, the vehicle 20 executes the process of step S50. In step S50, the vehicle 20 stores the received authentication package ATP. The authentication package ATP is the authentication information AT for authenticating the guest key KN.

After completing the registration management, the management server 70 transmits a completion notification M33 of the key status update to the third device 30C.

Upon receiving the completion notification M33 of the key status update, the third device 30C executes the process of step S51. In the process of step S51, the third device 30C presents information indicating completion of the registration of the guest key KN on the HMI 32. For example, the third device 30C displays an image indicating the completion of the registration of the guest key KN on the HMI 32. As a result, the management system 10 terminates the series of processes for registering the guest key KN.

### Deletion of Digital Key

Next, a series of processes for deleting a digital key from the management system 10 will be described. In a state in which the digital key is registered, the vehicle 20 stores the authentication information AT, and the devices 30 store the key information DK. In the state in which the digital key is registered, the digital key is allowed to control the vehicle 20. When at least one of the authentication information AT stored in the vehicle 20 and the key information DK stored in the device 30 is deleted, the vehicle 20 is not controllable using the digital key.

The deletion of a digital key refers to deleting at least one of the authentication information AT stored in the vehicle 20 and the key information DK stored in the device 30. As a result, the vehicle 20 is not controllable using the digital key. In the series of processes described below, the management server 70 acts on the vehicle 20 and the device 30 to delete the authentication information AT stored in the vehicle 20 and the key information DK stored in the device 30.

### Deletion of the Guest Key KN

A series of processes for deleting the guest key KN from the management system 10 will be described. The following describes the overall process from a state in which the guest key KN key is registered to a state in which the guest key KN is no longer registered. In the following description, processes executed by the execution device 27 are described as processes executed by the vehicle 20. The processes executed by the execution device 36 will be described as processes executed by the device 30. The processes executed by the execution device 71 will be described as processes executed by the management server 70.

### Deletion of the Guest Key KN in Response to Request from the Friend Device 51

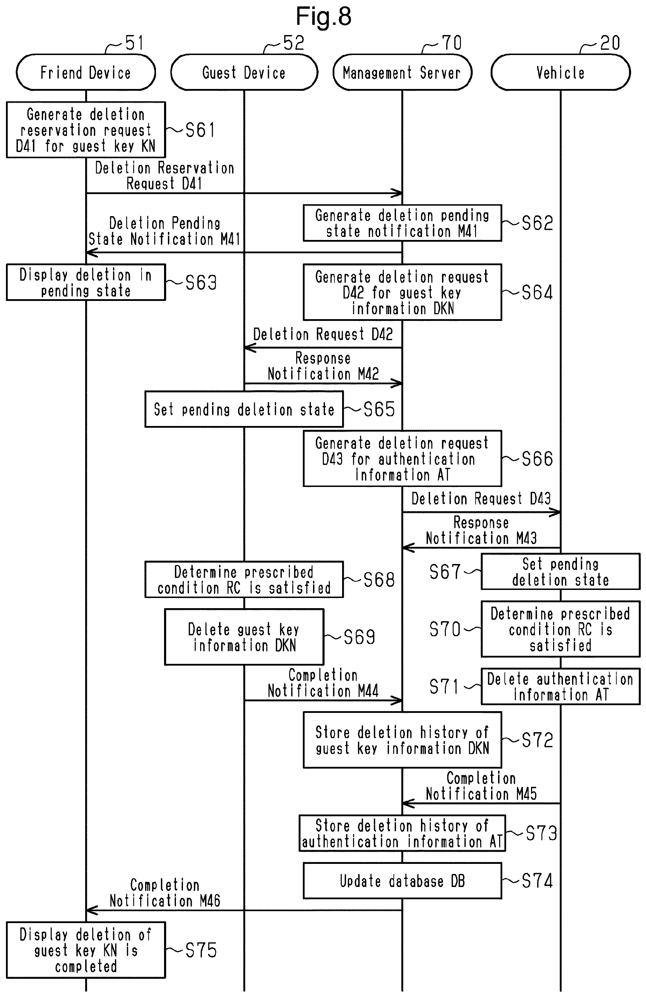

As shown in Fig. 8, the management system 10 executes a series of processes for deleting the guest key KN based on a deletion reservation request D41 from the friend device 51. In the series of processes shown in Fig. 8, the deletion program PC causes the execution device 71 to execute the processes executed in the management server 70.

When an operation for requesting the deletion of the guest key KN is performed on the friend device 51, the friend device 51 first executes the process of step S61. In step S61, the deletion reservation request D41 for the guest key KN is generated. The deletion reservation request D41 is a signal that requests deletion of the guest key KN when a prescribed condition RC is satisfied. The prescribed condition RC will be described later.

The deletion reservation request D41 includes a signal requesting deletion of the guest key KN and digital key identification information ST3 indicating the guest key KN. The friend device 51 transmits the deletion reservation request D41 for the guest key KN to the management server 70.

Upon receiving the deletion reservation request D41 for the guest key KN, the management server 70 executes the process of step S62. In step S62, the management server 70 generates a deletion pending state notification M41, which indicates that the deletion is pending, based on the deletion reservation request D41. Then, the management server 70 transmits the deletion pending state notification M41 to the friend device 51.

Upon receiving the deletion pending state notification M41, the friend device 51 executes the process of step S63. In step S63, the friend device 51 presents, to the HMI 32, information indicating that deletion of the guest key KN, which is the target of the deletion reservation request D41, is pending and that the guest key KN will be deleted upon satisfaction of the prescribed condition RC.

The prescribed condition RC is a condition necessary for the management server 70 to start the deletion after the deletion reservation request D41 is transmitted. The prescribed condition RC is determined in advance. Fig. 8 shows two prescribed conditions RC, that is, a prescribed condition RC for the guest device 52 and a prescribed condition RC for the vehicle 20. When at least one of the prescribed condition RC for the guest device 52 and the prescribed condition RC of the vehicle 20 is satisfied, the guest key KN, which is the target of the deletion reservation request D41, is deleted.

After the process of step S62, the management server 70 executes the process of step S64. In step S64, the management server 70 generates a deletion request D42 to delete the guest key information DKN indicating the guest key KN, which is the target of the deletion reservation request D41. The management server 70 transmits the deletion request D42 to the guest device 52.

Upon receiving the deletion request D42, the guest device 52 transmits a response notification M42 toward the management server 70. The response notification M42 indicates that the guest device 52 has received the deletion request D42.

The guest device 52 executes the process of step S65. In step S65, the guest device 52 sets the guest key KN, which is the target of the deletion reservation request D41, to a pending deletion state in the storage device 37. The pending deletion state refers to a state in which the deletion reservation request D41 has been transmitted but execution of the deletion is still suspended.

The management server 70 transmits the deletion request D42 and then executes the process of step S66. In step S66, the management server 70 generates a deletion request D43 for the authentication information AT. The deletion request D43 for the authentication information AT indicates a request to delete the authentication information AT for authenticating the guest key KN that is the target of the deletion reservation request D41. Then, the management server 70 transmits the deletion request D43 to the vehicle 20.

Upon receiving the deletion request D43, the vehicle 20 transmits a response notification M43 toward the management server 70. The response notification M43 indicates that the vehicle 20 has received the deletion request D43.

The vehicle 20 executes the process of step S67. In step S67, the vehicle 20 sets the guest key KN, which is the target of the deletion reservation request D41, to a pending deletion state in the storage device 28.

The prescribed condition RC for the guest device 52 is that a predetermined pending deletion period has elapsed since the guest device 52 received the deletion request. The pending deletion period is, for example, twenty-four hours. After execution of the process of step S65, when the prescribed condition RC for the guest device 52 is satisfied, the guest device 52 executes the process of step S68. In step S68, the guest device 52 determines that the prescribed condition RC is satisfied. When the guest device 52 determines that the prescribed condition RC is satisfied, the guest device 52 advances the process to step S69.

In step S69, the guest device 52 deletes the guest key information DKN in accordance with the deletion request D42. The guest device 52 transmits a completion notification M44 to the management server 70 to indicate that the deletion is completed in accordance with the deletion request D42.

The prescribed condition RC of the vehicle 20 is that a predetermined pending deletion period has elapsed since the vehicle 20 received the deletion request. The pending deletion period is, for example, twenty-four hours. After execution of the process of step S67, when the prescribed condition RC of the vehicle 20 is satisfied, the vehicle 20 executes the process of step S70. In step S70, the vehicle 20 determines that the prescribed condition RC is satisfied. When the vehicle 20 determines that the prescribed condition RC is satisfied, the vehicle 20 advances the process to step S71.

In step S71, in accordance with the deletion request D43, the vehicle 20 deletes the authentication information AT for authenticating the guest key KN, which is the target of the deletion reservation request D41. That is, the vehicle 20 deletes the authentication package ATP of the guest key KN. Thereafter, the vehicle 20 transmits a completion notification M45 to the management server 70 to indicate that the deletion of the authentication information AT in accordance with the deletion request D43 is completed.

Upon receiving the completion notification M44 from the guest device 52, the management server 70 executes the process of step S72. In step S72, the management server 70 stores a history of deletion of the guest key information DKN from the guest device 52.

Upon receiving the completion notification M45 from the vehicle 20, the management server 70 executes the process of step S73. In step S73, the management server 70 stores a history of deletion of the authentication information AT for authenticating the guest key KN, which is the target of deletion.

In Fig. 8, the management server 70 receives a completion notification from the guest device 52 before receiving a completion notification from the vehicle 20. Alternatively, the management server 70 may receive a completion notification from the vehicle 20 before receiving a completion notification from the guest device 52. In this case, the management server 70 executes the process of steps S72 and S73 in reverse order.

After execution of the process of steps S72 and S73, the management server 70 executes the process of step S74. In step S74, the management server 70 updates the database DB. Specifically, the management server 70 deletes the guest device 52 having the guest key KN that is to be deleted from the data DA of the vehicle 20 in the database DB. Thereafter, the management server 70 transmits a completion notification M46 to the friend device 51 to indicate that deletion of the guest key KN in accordance with the deletion reservation request D41 is completed.

Upon receiving the completion notification M46, the friend device 51 executes the process of step S75. In step S75, the friend device 51 presents, to the HMI 32, information indicating that deletion of the guest key KN, which is the target of the deletion reservation request D41, is completed. For example, the friend device 51 displays an image indicating completion of the deletion of the guest key KN on the HMI 32. Then, the management system 10 terminates the current series of processes for deleting the guest key KN.

### Deletion of Guest Key KN by Deletion Operation on Guest Device 52

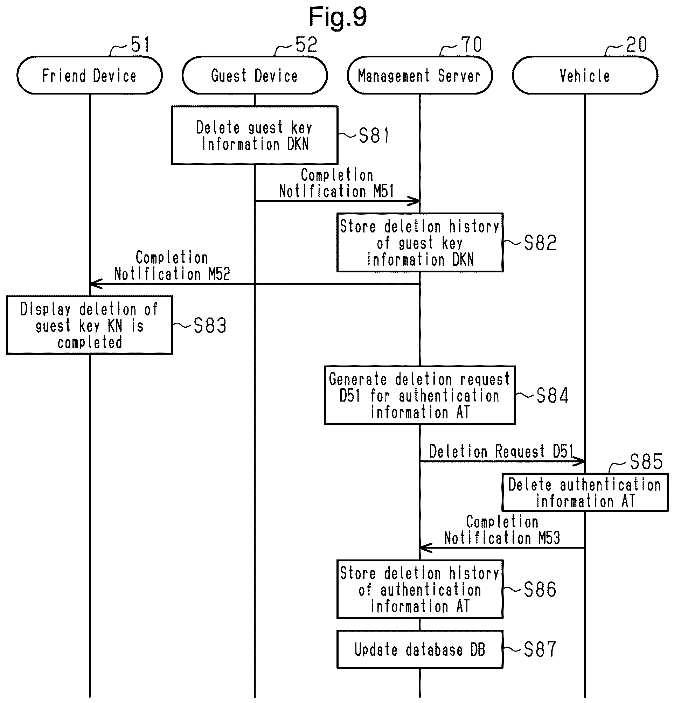

As shown in Fig. 9, the management system 10 executes a series of processes for deleting the guest key KN indicated by the guest key information DKN stored in the guest device 52 in response to a deletion operation performed on the guest device 52.

When a prescribed operation for requesting deletion of the guest key KN is performed on the guest device 52, the guest device 52 first executes the process of step S81. In step S81, the guest device 52 deletes the guest key information DKN in accordance with a prescribed operation. Thereafter, the guest device 52 transmits, to the management server 70, a completion notification M51 indicating that deletion of the guest key information DKN is completed.

Upon receiving the completion notification M51, the management server 70 executes the process of step S82. In step S82, the management server 70 stores a history of the deletion of the guest key information DKN from the guest device 52. Thereafter, the management server 70 transmits a completion notification M52 to the friend device 51 to indicate that the guest key information DKN has been deleted.

Upon receiving the completion notification M52, the friend device 51 executes the process of step S83. In step S83, the friend device 51 presents, to the HMI 32, information indicating that deletion of the guest key information DKN of the guest device 52 has been completed. For example, the friend device 51 displays an image indicating completion of the deletion of the guest key KN on the HMI 32.

After the process of step S82, the management server 70 executes the process of step S84. In step S84, the management server 70 generates a deletion request D51 to delete the authentication information AT for authenticating the guest key information DKN that has been deleted in step S81. The management server 70 transmits the deletion request D51 to the vehicle 20.

Upon receiving the deletion request D51, the vehicle 20 executes the process of step S85. In step S85, in accordance with the deletion request D51, the vehicle 20 deletes the authentication information AT for authenticating the guest key information DKN that has been deleted in step S81. The vehicle 20 then transmits, to the management server 70, a completion notification M53 indicating that the deletion of the authentication information AT in accordance with the deletion request D51 is completed.

Upon receiving the completion notification M53, the management server 70 executes the process of step S86. In step S86, the management server 70 stores a history of the deletion of the authentication information AT for authenticating the guest key DKN that has been deleted in step S81. Thereafter, the management server 70 advances the process to step S87.

In step S87, the management server 70 updates the database DB. Specifically, the management server 70 deletes the guest device 52 having the guest key KN to be deleted in the current series of processes, from the data DA of the vehicle 20 in the database DB. As a result, the management system 10 terminates the current series of processes for deleting the guest key KN.

### Deletion of Friend Key KF

Next, a series of processes for deleting the friend key KF in the management system 10 will be described. The following describes the overall process from a state in which the friend key KF is registered to a state in which the friend key KF is no longer registered. In the following description, processes executed by the execution device 27 are described as processes executed by the vehicle 20. The processes executed by the execution device 36 will be described as processes executed by the device 30. The processes executed by the execution device 71 will be described as processes executed by the management server 70.

### Deletion of the Friend Key KF in Response to Request from the Owner Device 40

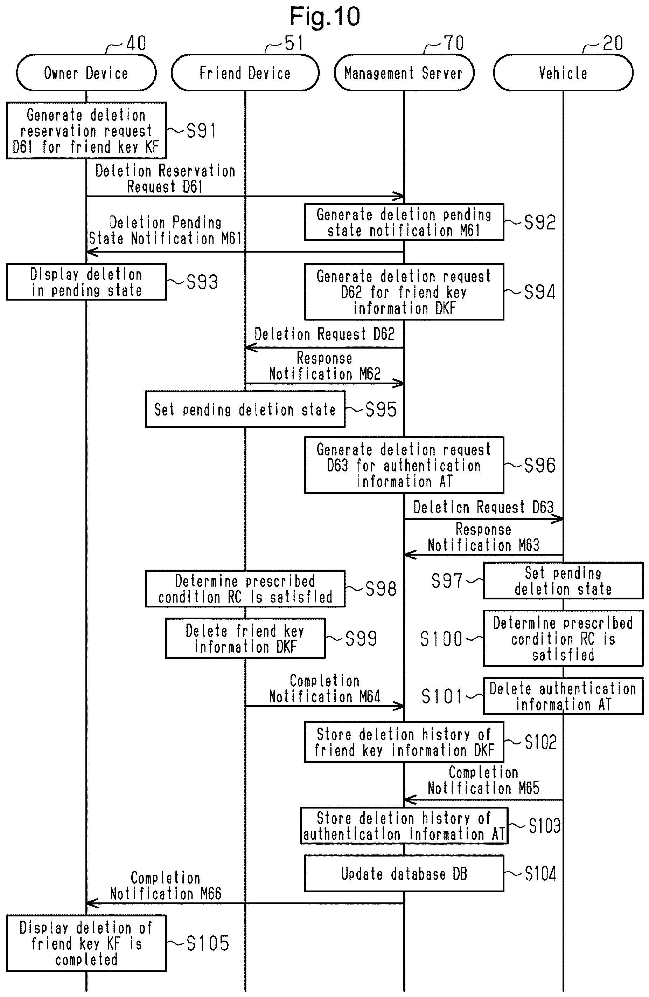

As shown in Fig. 10, the management system 10 executes a series of processes for deleting the friend key KF based on a deletion reservation request D61 from the owner device 40. In the series of processes shown in Fig. 10, the deletion program PC causes the execution device 71 to execute the processes executed in the management server 70.

When an operation for requesting the deletion of the friend key KF is performed on the owner device 40, the owner device 40 first executes the process of step S91. In step S91, the deletion reservation request D61 for the friend key KF is generated. The deletion reservation request D61 is a request for a deletion reservation. The deletion reservation request D61 is a signal that requests deletion of the friend key KF when a prescribed condition RC is satisfied. The prescribed condition RC will be described later.

The deletion reservation request D61 includes information indicating a signal requesting deletion of the friend key KF and digital key identification information ST3 indicating the friend key KF. The owner device 40 transmits the deletion reservation request D61 for the friend key KF to the management server 70.

Upon receiving the deletion reservation request D61 for the friend key KF, the management server 70 executes the process of step S92. In step S92, the management server 70 generates a deletion pending state notification M61, which indicates that the deletion is pending, based on the deletion reservation request D61. The management server 70 transmits the deletion pending state notification M61 to the owner device 40.

Upon receiving the deletion pending state notification M61, the owner device 40 executes the process of step S93. In step S93, the owner device 40 presents, on the HMI 32, information indicating that deletion of the friend key KF, which is the target of the deletion reservation request D61, is pending and that the friend key KF will be deleted upon satisfaction of the prescribed condition RC.

The prescribed condition RC is a condition necessary for the management server 70 to start the deletion after the deletion reservation request D61 is transmitted. The prescribed condition RC is determined in advance. Fig. 10 shows two prescribed conditions RC; that is, a prescribed condition RC for the friend device 51 and a prescribed condition RC for the vehicle 20. When at least one of the prescribed condition RC for the friend device 51 and the prescribed condition RC of the vehicle 20 is satisfied, the friend key KF, which is the target of the deletion reservation request D61, is deleted.

After the process of step S92, the management server 70 executes the process of step S94. In step S94, the management server 70 generates a deletion request D62 to delete the friend key information DKF indicating the friend key KF, which is the target of the deletion reservation request D61. The management server 70 transmits the deletion request D62 to the friend device 51.

Upon receiving the deletion request D62, the friend device 51 transmits a response notification M62 toward the management server 70. The response notification M62 indicates that the friend device 51 has received the deletion request D62.

Then, the friend device 51 executes the process of step S95. In step S95, the friend device 51 sets the friend key KF, which is the target of the deletion reservation request D61, to a pending deletion state in the storage device 37. The pending deletion state refers to a state in which the deletion reservation request D61 has been transmitted but execution of the deletion is still suspended.

After transmitting the deletion request D62, the management server 70 executes the process of step S96. In step S96, the management server 70 generates a deletion request D63 for the authentication information AT. The deletion request D63 for the authentication information AT indicates a request to delete the authentication information AT for authenticating the friend key KF that is the target of the deletion reservation request D61. The management server 70 transmits the deletion request D63 to the vehicle 20.

Upon receiving the deletion request D63, the vehicle 20 transmits a response notification M63 toward the management server 70. The response notification M63 indicates that the vehicle 20 has received the deletion request D63.

The vehicle 20 executes the process of step S97. In step S97, the vehicle 20 sets the friend key KF, which is the target of the deletion reservation request D61, to a pending deletion state in the storage device 28.

The prescribed condition RC for the friend device 51 is that a predetermined pending deletion period has elapsed since the friend device 51 received the deletion request. The pending deletion period is, for example, twenty-four hours. After execution of the process of step S95, when the prescribed condition RC for the friend device 51 is satisfied, the friend device 51 executes the process of step S98. In step S98, the friend device 51 determines that the prescribed condition RC is satisfied. When the friend device 51 determines that the prescribed condition RC is satisfied, the friend device 51 advances the process to step S99.

In step S99, the friend device 51 deletes the friend key information DKF in accordance with the deletion request D62. The friend device 51 transmits a completion notification M64 to the management server 70 to indicate that the deletion is completed in accordance with the deletion request D62.

The prescribed condition RC of the vehicle 20 is that a predetermined pending deletion period has elapsed since the vehicle 20 received the deletion request. The pending deletion period is, for example, twenty-four hours. After execution of the process of step S97, when the prescribed condition RC of the vehicle 20 is satisfied, the vehicle 20 executes the process of step S100. In step S100, the vehicle 20 determines that the prescribed condition RC is satisfied. When the vehicle 20 determines that the prescribed condition RC is satisfied, the vehicle 20 advances the process to step S101.

In step S101, in accordance with the deletion request D63, the vehicle 20 deletes the authentication information AT for authenticating the friend key KF, which is the target of the deletion reservation request D61. That is, the vehicle 20 deletes the authentication package ATP of the friend key KN. Thereafter, the vehicle 20 transmits a completion notification M65 to the management server 70 to indicate that the deletion of the authentication information AT in accordance with the deletion request D63 is completed.

Upon receiving the completion notification M64 from the friend device 51, the management server 70 executes the process of step S102. In step S102, the management server 70 stores a history of deletion of the friend key information DKF from the friend device 51.

Upon receiving the completion notification M65 from the vehicle 20, the management server 70 executes the process of step S103. In step S103, the management server 70 stores a history of deletion of the authentication information AT for authenticating the friend key KN, which is the target of deletion.

In Fig. 10, the management server 70 receives a completion notification from the friend device 51 before receiving a completion notification from the vehicle 20. Alternatively, the management server 70 may receive a completion notification from the vehicle 20 before receiving a completion notification from the friend device 51. In this case, the management server 70 executes the process of steps S102 and S103 in reverse order.

After execution of the process of steps S102 and S103, the management server 70 executes the process of step S104. In step S104, the management server 70 updates the database DB. Specifically, the management server 70 deletes the friend device 51 having the friend key KF that is to be deleted from the data DA of the vehicle 20 in the database DB. Thereafter, the management server 70 transmits a completion notification M66 to the owner device 40 to indicate that deletion of the friend key KF in accordance with the deletion reservation request D61 is completed.

Upon receiving the completion notification M66, the owner device 40 executes the process of step S105. In step S105, the owner device 40 presents, to the HMI 32, information indicating that deletion of the friend key KF, which is the target of the deletion reservation request D61, is completed. For example, the owner device 40 displays an image indicating the completion of the deletion of the friend key KF on the HMI 32. Then, the management system 10 terminates the current series of processes for deleting the friend key KF.

### Deletion of Friend Key KF by Deletion Operation on Friend Device 51

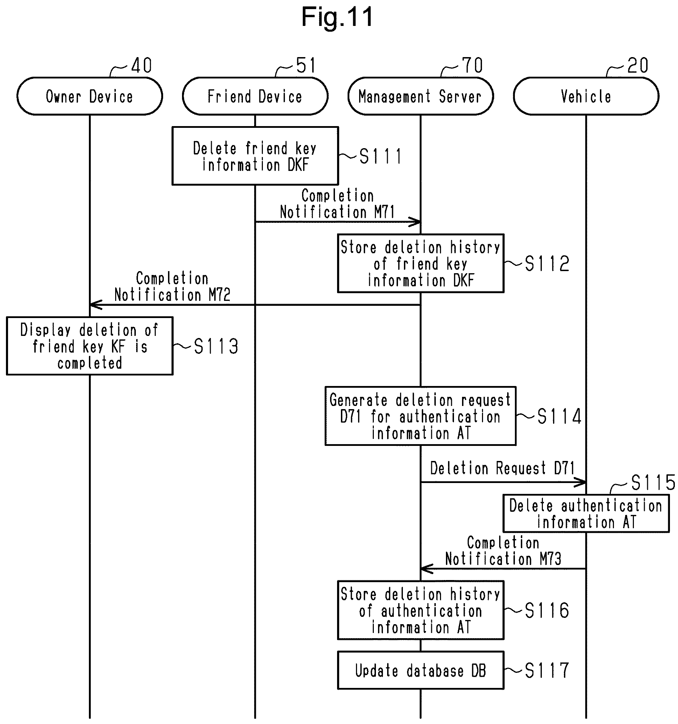

As shown in Fig. 11, the management system 10 executes a series of processes for deleting the friend key KF indicated by the friend key information DKF stored in the friend device 51 in response to a deletion operation performed on the friend device 51.

When a prescribed operation for requesting deletion of the friend key KF is performed on the friend device 51, the friend device 51 first executes the process of step S111. In step S111, the friend device 51 deletes the friend key information DKF in accordance with a predetermined operation. Thereafter, the friend device 51 transmits a completion notification M71 to the management server 70 to indicate that deletion of the friend key information DKF is completed.

Upon receiving the completion notification M71, the management server 70 executes the process of step S112. In step S112, the management server 70 stores a history of deletion of the friend key information DKF from the friend device 51. Then, the management server 70 transmits a completion notification M72 to the owner device 40 to indicate that deletion of the friend key information DKF is completed.

Upon receiving the completion notification M72, the owner device 40 executes the process of step S113. In step S113, the owner device 40 presents, to the HMI 32, information indicating that deletion of the friend key information DKF of the friend device 51 has been completed. For example, the owner device 40 displays an image indicating the completion of the deletion of the friend key KF on the HMI 32.

After the process of step S112, the management server 70 executes the process of step S114. In step S114, the management server 70 generates a deletion request D71 to delete the authentication information AT for authenticating the friend key information DKF that has been deleted in step S111. The management server 70 transmits the deletion request D71 to the vehicle 20.

Upon receiving the deletion request D71, the vehicle 20 executes the process of step S115. In step S115, in accordance with the deletion request D71, the vehicle 20 deletes the authentication information AT for authenticating the friend key information DKF that has been deleted in step S111. Thereafter, the vehicle 20 transmits a completion notification M73 to the management server 70 to indicate that the deletion of the authentication information AT in accordance with the deletion request D71 is completed.

Upon receiving the completion notification M73, the management server 70 executes the process of step S116. In step S116, the management server 70 stores a history of deletion of the authentication information AT for authenticating the friend key information DKF that has been deleted in step S111. Thereafter, the management server 70 advances the process to step S117.

In step S117, the management server 70 updates the database DB. Specifically, the management server 70 deletes the friend device 51 having the friend key KF that is to be deleted in the current series of processes, from the data DA of the vehicle 20 in the database DB. Then, the management system 10 terminates the current series of processes for deleting the friend key KF.

### Deletion of Digital Key when the Management System 10 is in Non-Communicable State

As shown in Fig. 8, when the friend device 51 requests to delete the guest key KN, the management server 70 transmits the deletion request D42 to the guest device 52. Upon receiving the deletion request D42, the guest device 52 deletes the guest key information DKN for the guest key KN for which deletion is requested.

As shown in Fig. 8, when the friend device 51 requests to delete the guest key KN, the management server 70 transmits the deletion request D43 to the vehicle 20. Upon receiving the deletion request D43, the vehicle 20 deletes the authentication information AT for the guest key KN for which deletion is requested.

As shown in Fig. 10, when the owner device 40 requests to delete the friend key KF, the management server 70 transmits the deletion request D62 to the friend device 51. Upon receiving the deletion request D62, the friend device 51 deletes the friend key information DKF for the friend key KF for which deletion is requested.

As shown in Fig. 10, when the owner device 40 requests to delete the friend key KF, the management server 70 transmits the deletion request D63 to the vehicle 20. Upon receiving the deletion request D63, the vehicle 20 deletes the authentication information AT for the friend key KF for which deletion is requested.

As described above, when the management system 10 deletes a digital key, the management server 70 transmits a deletion request to the vehicle 20 and the device 30. Upon receiving the deletion request, the vehicle 20 deletes the authentication information AT. Upon receiving the deletion request, the device 30 deletes the key information DK.

When at least one of the authentication information AT stored in the vehicle 20 and the key information DK stored in the device 30 is deleted, the vehicle 20 is not controllable using the digital key.

For example, both the vehicle 20 and the device 30 may be in a location where radio waves do not reach. In such a case, both the vehicle 20 and the device 30 may be in a non-communicable state. In this state, even when a request to delete the digital key is issued, the device 30 and the vehicle 20 cannot receive the deletion request from the management server 70, and the digital key will not be deleted from the management system 10.

In such a situation, the management server 70 acts to delete the digital key.

### Deletion of Guest Key KN in a Non-Communicable State

A series of processes executed by the management system 10 when the vehicle 20 and the guest device 52 are in a non-communicable state and the friend device 51 requests to delete the guest key KN will be described below. In the following description, processes executed by the execution device 27 are described as processes executed by the vehicle 20. The processes executed by the execution device 36 will be described as processes executed by the device 30. The processes executed by the execution device 71 will be described as processes executed by the management server 70. In the following description, the deletion program PC causes the execution device 71 to execute the processes executed in the management server 70.

### Detection of a Non-Communicable State with the Management Server 70

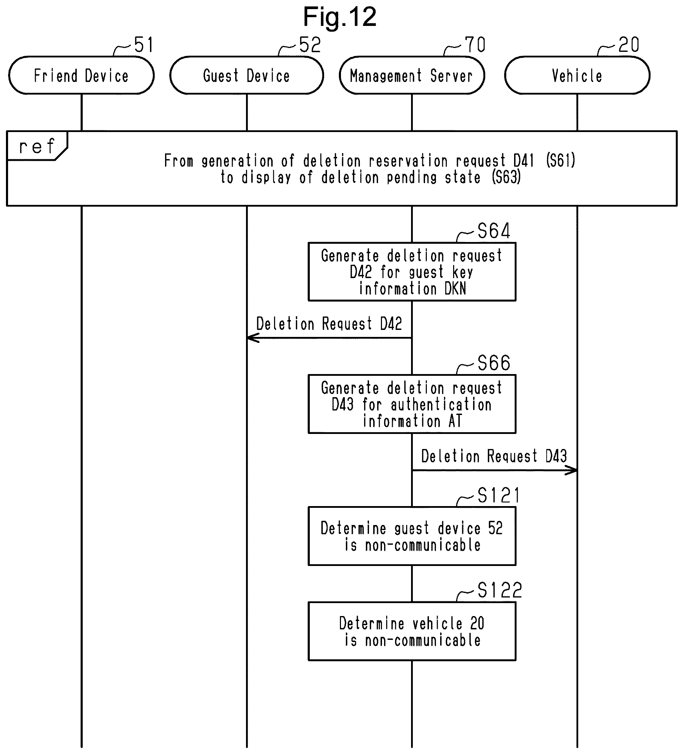

Fig. 12 shows a mode in which the management server 70 detects that both the vehicle 20 and the guest device 52 are in a non-communicable state.

From the process of generating the deletion reservation request D41 by the friend device 51 to the process of presenting by the friend device 51 that the deletion is pending are the same as steps S61 to S63 shown in Fig. 8.

In the same manner as shown in Fig. 8, after execution of the process of step S62, the management server 70 executes the step of step S64. In step S64, the management server 70 generates the deletion request D42 for the guest key information DKN. This process is the same as that of step S64 in Fig. 8. Then, the management server 70 transmits the deletion request D42 to the guest device 52.

After execution of the process of step S64, the management server 70 executes the process of step S66. In step S66, the management server 70 generates the deletion request D43 for the authentication information AT. This process is the same as that of step S66 in Fig. 8. Subsequently, the management server 70 transmits the deletion request D43 toward the vehicle 20.

Since the guest device 52 is in a non-communicable state, the guest device 52 does not receive the deletion request D42. Hence, the guest device 52 does not execute the process of steps S65, S68, and S69, which differs from the process shown in Fig. 8.

In Fig. 8, when the guest device 52 receives the deletion request D42, the guest device 52 transmits the response notification M42 toward the management server 70. In Fig. 12, the guest device 52 does not receive the deletion request D42 and thus does not transmit the response notification M42 toward the management server 70.

When the response notification M42 is not received from the guest device 52 in a fixed period after transmission of the deletion request D42, the management server 70 executes the process of step S121. In step S121, the management server 70 determines that the guest device 52 is in a non-communicable state.

Since the vehicle 20 is in a non-communicable state, the vehicle 20 does not receive the deletion request D43. Hence, the vehicle 20 does not execute the process of steps S67, S70, and S71, which differs from the process shown in Fig. 8.

In Fig. 8, upon receiving the deletion request D43, the vehicle 20 transmits the response notification M43 toward the management server 70. In Fig. 12, since the vehicle 20 does not receive the deletion request D43, the vehicle 20 does not transmit the response notification M43 toward the management server 70.

When the response notification M43 is not received from the vehicle 20 in a fixed period after transmission of the deletion request D43, the management server 70 executes the process of step S122. In step S122, the management server 70 determines that the vehicle 20 is in a non-communicable state. This terminates a series of processes shown in Fig. 12.

The management server 70 executes the process of steps S121 and S122 to detect that both the vehicle 20 and the guest device 52 are in a non-communicable state.

### Process Executed after Detection of a Non-Communicable State (up to Step S133)

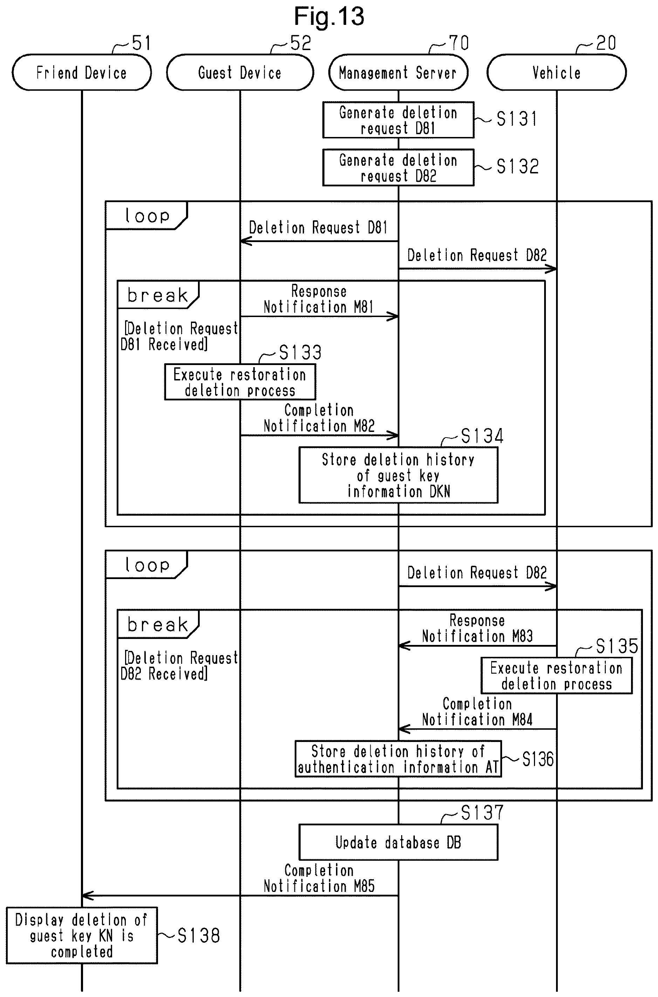

Fig. 13 shows an example of a series of processes executed by the management system 10 after the management server 70 detects that both the vehicle 20 and the guest device 52 are in a non-communicable state. The management system 10 executes a series of processes shown in Fig. 12 and then a series of processes shown in Fig. 13.

After detecting that both the vehicle 20 and the guest device 52 are in a non-communicable state, the management server 70 executes the process of step S131. In step S131, the management server 70 generates a deletion request D81. The deletion request D81 includes information indicating that the request is retransmitted in addition to the deletion request D42 shown in Fig 12. The deletion request D81 includes information indicating the time at which the deletion request D42 was transmitted.

Then, the management server 70 executes the process of step S132. In step S132, the management server 70 generates a deletion request D82. The deletion request D82 includes information indicating that the request is retransmitted in addition to the deletion request D43 shown in Fig 12. The deletion request D82 includes information indicating the time at which the deletion request D43 was transmitted.

As shown in Fig. 13, after execution of the process of step S131, the management server 70 repeatedly transmits the deletion request D81 toward the guest device 52. When the guest device 52 is restored from the non-communicable state to a communicable state, the guest device 52 may receive the deletion request from the management server 70. The management server 70 continues to transmit the deletion request D81 until the guest device 52 is restored to the communicable state.

As shown in Fig. 13, after execution of the process of step S132, the management server 70 repeatedly transmits the deletion request D82 toward the vehicle 20. When the vehicle 20 is restored from the non-communicable state to a communicable state, the vehicle 20 may receive the deletion request from the management server 70. The management server 70 continues to transmit the deletion request D82 until the vehicle 20 is restored to the communicable state.

In Fig. 13, the guest device 52 is restored to the communicable state and receives the deletion request D81 before the vehicle 20. Upon receiving the deletion request D81, the guest device 52 transmits a response notification M81 toward the management server 70. The response notification M81 indicates that the deletion request D81 is received by the guest device 52. When receiving the response notification M81, the management server 70 stops transmitting the deletion request D81.

Upon receiving the deletion request D81, the guest device 52 executes the process of step S133. In step S133, the guest device 52 executes a restoration deletion process.

### Restoration Deletion Process Executed by the Guest Device 52

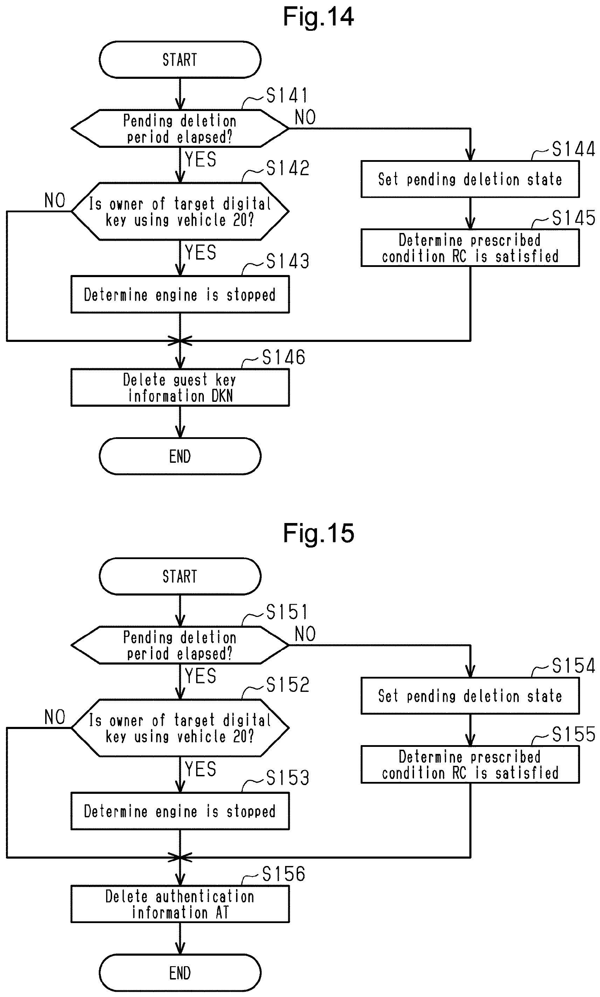

Fig. 14 shows a mode in which the guest device 52 executes the restoration deletion process. In step S133 shown in Fig. 13, the guest device 52 executes a series of processes shown in Fig. 14.

As shown in Fig. 14, the guest device 52 first executes the process of step S141. In the process of step S141, the guest device 52 determines whether the pending deletion period has elapsed from when the deletion request was transmitted toward the guest device 52 for the first time until the guest device 52 receives the deletion request D81. The period from when the deletion request is transmitted toward the guest device 52 for the first time until the guest device 52 receives the deletion request D81 is referred to as a reception delay period.

The deletion request D42 refers to a deletion request that is transmitted toward the guest device 52 for the first time in the management system 10. In the process of step S141, the guest device 52 determines whether the reception delay period is longer than the pending deletion period. In this process, the guest device 52 makes the determination based on information included in the deletion request D81 indicating the time at which the deletion request D42 was transmitted.

When the reception delay period is less than or equal to the pending deletion period, the guest device 52 determines that the pending deletion period has not elapsed. When determining that the pending deletion period has not elapsed (step S141: NO), the guest device 52 advances the process to step S144. In step S144, the guest device 52 sets the guest key KN in the storage device 37 to the pending deletion state. This process is the same as the process executed by the guest device 52 in step S65 in Fig. 8.

After execution of the process of step S144, when the prescribed condition RC is satisfied, the guest device 52 executes the process of step S145. The guest device 52 determines that the prescribed condition RC is satisfied when the pending deletion period has elapsed from when the deletion request D42 is transmitted. In step S145, the guest device 52 determines that the prescribed condition RC is satisfied.

After performing the process of step S145, the guest device 52 executes the process of step S146. In step S146, the guest device 52 deletes the guest key information DKN. This process is the same as the process executed by the guest device 52 in step S69 in Fig. 8. Then, the guest device 52 terminates a series of processes shown in Fig. 14.

When the reception delay period is longer than the pending deletion period, the guest device 52 determines that the pending deletion period has elapsed. When determining that the pending deletion period has elapsed (step S141: YES), the guest device 52 advances the process to step S142.

In the process of step S142, the guest device 52 determines whether the person owning a target digital key is using the vehicle 20. The target digital key refers to a digital key that is subject to deletion. In the processes shown in Figs. 12 and 13, the target digital key is the guest key KN, which is the target of the deletion reservation request D41. The device 30 storing the key information DK of the target digital key is referred to as a target device. In the processes shown in Figs. 12 and 13, the target device is the guest device 52. The guest key information DKN, which is deleted in the process of step S146, is related to the target digital key, that is, second target key-related information.

As described above, while the authentication is in the completion state, the digital key is allowed to control the vehicle 20. When the authentication of the guest key KN registered for the guest device 52 is in the completion state, the guest device 52 determines that the owner of the target digital key is using the vehicle 20.

When determining that the owner of the target digital key is not using the vehicle 20 (step S142: NO), the guest device 52 advances the process to step S146. In step S146, the guest device 52 deletes the guest key information DKN. Then, the guest device 52 terminates a series of processes shown in Fig. 14.

As described above, under a certain condition, upon receiving a deletion request, the guest device 52 deletes the guest key information DKN without waiting for the pending deletion period to elapse.

When determining that the owner of the target digital key is using the vehicle 20 (step S142: YES), the guest device 52 advances the process to step S143. In step S143, the guest device 52 determines that the engine of the vehicle 20 is stopped. In an example, the guest device 52 communicates with the vehicle 20 through the BLE communication. If receiving a message indicating that the engine is stopped from the vehicle 20 through the communication, the guest device 52 determines that the engine is stopped.

After execution of the process of step S143, the guest device 52 executes the process of step S146. As described above, in step S146, the guest device 52 deletes the guest key information DKN. Then, the guest device 52 terminates a series of processes shown in Fig. 14.

As described above, even when it is determined in step S141 that the pending deletion period has elapsed, if the owner of the target digital key is using the vehicle 20, the guest device 52 does not delete the guest key information DKN until the engine stops.

### Process Executed after Detection of a Non-Communicable State (up to Step S135)

As shown in Fig. 13, after execution of the process of step S133, the guest device 52 transmits a completion notification M82 to the management server 70 to indicate that deletion is completed in accordance with the deletion request D81.

Upon receiving the completion notification M82 from the guest device 52, the management server 70 executes the process of step S134. In step S134, the management server 70 stores a history of deletion of the guest key information DKN from the guest device 52. This process is the same as that of step S72 in Fig. 8.

Even after receiving the response notification M81 from the guest device 52, the management server 70 continues to transmit the deletion request D82 to the vehicle 20.

In Fig. 13, after the guest device 52 is restored to a communicable state, the vehicle 20 is restored to a communicable state and receives the deletion request D82. Upon receiving the deletion request D82, the vehicle 20 transmits a response notification M83 toward the management server 70. The response notification M83 indicates that the vehicle 20 has received the deletion request D82. When receiving the response notification M83, the management server 70 stops transmitting the deletion request D82.

Upon receiving the deletion request D82, the vehicle 20 executes the process of step S135. In step S135, the vehicle 20 executes the restoration deletion process.

### Restoration Deletion Process Executed by the Vehicle 20

Fig. 15 shows a mode in which the vehicle 20 executes the restoration deletion process. In step S135 shown in Fig. 13, the vehicle 20 executes a series of processes shown in Fig. 15.

As shown in Fig. 15, the vehicle 20 first executes the process of step S151. In the process of step S151, the vehicle 20 determines whether the pending deletion period has elapsed from when the deletion request was transmitted toward the vehicle 20 for the first time until the vehicle 20 received the deletion request D82. The period from when the deletion request is transmitted toward the vehicle 20 for the first time until the vehicle 20 receives the deletion request D82 is referred to as the reception delay period.

The deletion request D43 refers to a deletion request that is transmitted toward the vehicle 20 for the first time in the management system 10. In the process of step S151, the vehicle 20 determines whether the reception delay period is longer than the pending deletion period. In this process, the vehicle 20 makes the determination based on information included in the deletion request D82 indicating the time at which the deletion request D43 was transmitted.

When the reception delay period is less than or equal to the pending deletion period, the vehicle 20 determines that the pending deletion period has not elapsed. When determining that the pending deletion period has not elapsed (step S151: NO), the vehicle 20 advances the process to step S154. In step S154, the vehicle 20 sets the guest key KN in the storage device 28 to the pending deletion state. This process is the same as the process executed by the vehicle 20 in step S67 shown in Fig 8.

After execution of the process of step S154, when the prescribed condition RC is satisfied, the vehicle 20 executes the process of step S155. The vehicle 20 determines that the prescribed condition RC is satisfied when the pending deletion period has elapsed from when the deletion request D43 is transmitted. In step S155, the vehicle 20 determines that the prescribed condition RC is satisfied.

After execution of the process of step S155, the vehicle 20 executes the process of step S156. In step S156, the vehicle 20 deletes the authentication information AT. The authentication information AT, which is deleted in the process of step S156, is related to the target digital key; that is, the authentication information AT is first target key-related information. This process is the same as the process executed by the vehicle 20 in step S71 shown in Fig 8. The vehicle 20 terminates the series of processes shown in Fig. 15.

When the reception delay period is longer than the pending deletion period, the vehicle 20 determines that the pending deletion period has elapsed. When determining that the pending deletion period has elapsed (step S151: YES), the vehicle 20 advances the process to step S152.

In the process of step S152, the vehicle 20 determines whether the person owning the target digital key is using the vehicle 20.

While the authentication is in the completion state, the digital key is allowed to control the vehicle 20. When the authentication of the guest key KN for which deletion is requested is in the completion state, the vehicle 20 determines that the owner of the target digital key is using the vehicle 20.

When determining that the owner of the target digital key is not using the vehicle 20 (step S152: NO), the vehicle 20 advances the process to step S156. In step S156, the vehicle 20 deletes the authentication information AT. The vehicle 20 terminates the series of processes shown in Fig. 15.

As described above, under a certain condition, upon receiving the deletion request, the vehicle 20 deletes the authentication information AT without waiting for the pending deletion period to elapse.

When determining that the owner of the target digital key is using the vehicle 20 (step S152: YES), the vehicle 20 advances the process to step S153. In step S153, the vehicle 20 determines that the engine of the vehicle 20 is stopped.

After execution of the process of step S153, the vehicle 20 executes the process of step S156. As described above, in step S156, the vehicle 20 deletes the authentication information AT. Then, the vehicle 20 terminates the series of processes shown in Fig. 15.

As described above, even when it is determined in step S151 that the pending deletion period has elapsed, if the owner of the target digital key is using the vehicle 20, the vehicle 20 does not delete the authentication information AT until the engine stops.

### Process Executed after Detection of a Non-Communicable State (from Step S135)

As shown in Fig. 13, after execution of the process of step S135, the vehicle 20 transmits a completion notification M84 to the management server 70 to indicate that deletion of the authentication information AT is completed in accordance with the deletion request D82.

Upon receiving the completion notification M84 from the vehicle 20, the management server 70 executes the process of step S136. In step S136, the management server 70 stores a history of deletion of the authentication information AT for authenticating the guest key KN, which is the target of deletion. This process is the same as that of step S73 in Fig. 8.

After execution of the process of steps S134 and S136, the management server 70 executes the process of step S137. In step S137, the management server 70 updates the database DB. This process is the same as the process executed by the management server 70 in step S74 shown in Fig 8. Thereafter, the management server 70 transmits a completion notification M85 to the friend device 51 to indicate that deletion of the guest key KN in accordance with the deletion reservation request D41 is completed.

Upon receiving the completion notification M85, the friend device 51 executes the process of step S138. In step S138, the friend device 51 presents, to the HMI 32, information indicating that deletion of the guest key KN, which is the target of the deletion reservation request D41, is completed. This process is the same as the process executed by the friend device 51 in step S75 in Fig. 8. Then, the management system 10 terminates the current series of processes for deleting the guest key KN.

In Fig. 13, the guest device 52 is restored to the communicable state and receives the deletion request D81 before the vehicle 20. Alternatively, the vehicle 20 may be restored to the communicable state and receive the deletion request D82 before the guest device 52. In this case, the management server 70 executes the process of steps S134 and S136 in reverse order.

In Fig. 13, even after receiving the completion notification M82 from the guest device 52, the management server 70 continues to transmit the deletion request D82. Instead, in the management system 10, before one of the vehicle 20 and the guest device 52 transmits a completion notification in response to receipt of the deletion request, the other one of the vehicle 20 and the guest device 52 may be restored to the communicable state.

### Deletion of Friend Key KF in a Non-Communicable State

A series of processes executed by the management system 10 when the vehicle 20 and the friend device 51 are in a non-communicable state and the owner device 40 requests to delete the friend key KF will be described below. In the following description, processes executed by the execution device 27 are described as processes executed by the vehicle 20. The processes executed by the execution device 36 will be described as processes executed by the device 30. The processes executed by the execution device 71 will be described as processes executed by the management server 70. In the following description, the deletion program PC causes the execution device 71 to execute the processes executed in the management server 70.

### Detection of a Non-Communicable State with the Management Server 70

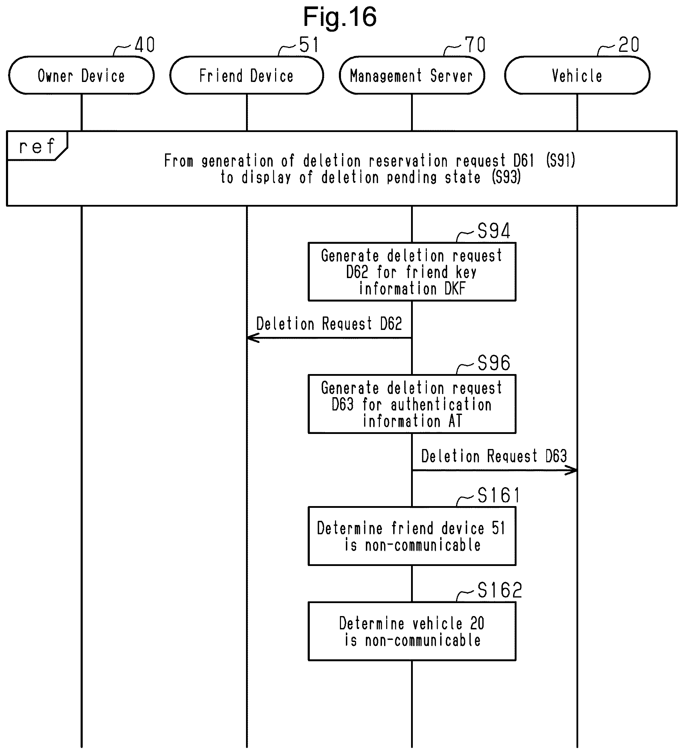

Fig. 16 shows a mode in which the management server 70 detects that both the vehicle 20 and the friend device 51 are in a non-communicable state.

From the process of generating the deletion reservation request D61 by the owner device 40 to the process of presenting by the owner device 40 that the deletion is pending are the same as steps S91 to S93 shown in Fig. 10.

In the same manner as shown in Fig. 10, after execution of the process of step S92, the management server 70 executes the step of step S94. In step S94, the management server 70 generates the deletion request D62 for the friend key information DKF. This process is the same as that of step S94 in Fig. 10. Subsequently, the management server 70 transmits the deletion request D62 toward the friend device 51.

After execution of the process of step S94, the management server 70 executes the process of step S96. In step S96, the management server 70 generates the deletion request D63 for the authentication information AT. This process is the same as that of step S96 in Fig. 10. Subsequently, the management server 70 transmits the deletion request D63 toward the vehicle 20.

Since the friend device 51 is in a non-communicable state, the friend device 51 does not receive the deletion request D62. Hence, the friend device 51 does not execute the process of steps S95, S98, and S99, which differs from the process shown in Fig. 10.

In Fig. 10, when the friend device 51 receives the deletion request D62, the friend device 51 transmits the response notification M62 toward the management server 70. In Fig. 16, the friend device 51 does not receive the deletion request D62 and thus does not transmit the response notification M62 toward the management server 70.

When the response notification M62 is not received from the friend device 51 in a fixed period after transmission of the deletion request D62, the management server 70 executes the process of step S161. In step S161, the management server 70 determines that the friend device 51 is in a non-communicable state.

Since the vehicle 20 is in a non-communicable state, the vehicle 20 does not receive the deletion request D63. Hence, the vehicle 20 does not execute the process of steps S97, S100, and S101, which differs from the process shown in Fig. 10.

In Fig. 10, upon receiving the deletion request D63, the vehicle 20 transmits the response notification M63 toward the management server 70. In Fig. 16, since the vehicle 20 does not receive the deletion request D63, the vehicle 20 does not transmit the response notification M63 toward the management server 70.

When the response notification M63 is not received from the vehicle 20 in a fixed period after transmission of the deletion request D63, the management server 70 executes the process of step S162. In step S162, the management server 70 determines that the vehicle 20 is in a non-communicable state. This terminates a series of processes shown in Fig. 16.

The management server 70 executes the process of steps S161 and S162 to detect that both the vehicle 20 and the guest device 52 are in a non-communicable state.

### Process Executed after Detection of a Non-Communicable State (up to Step S173)

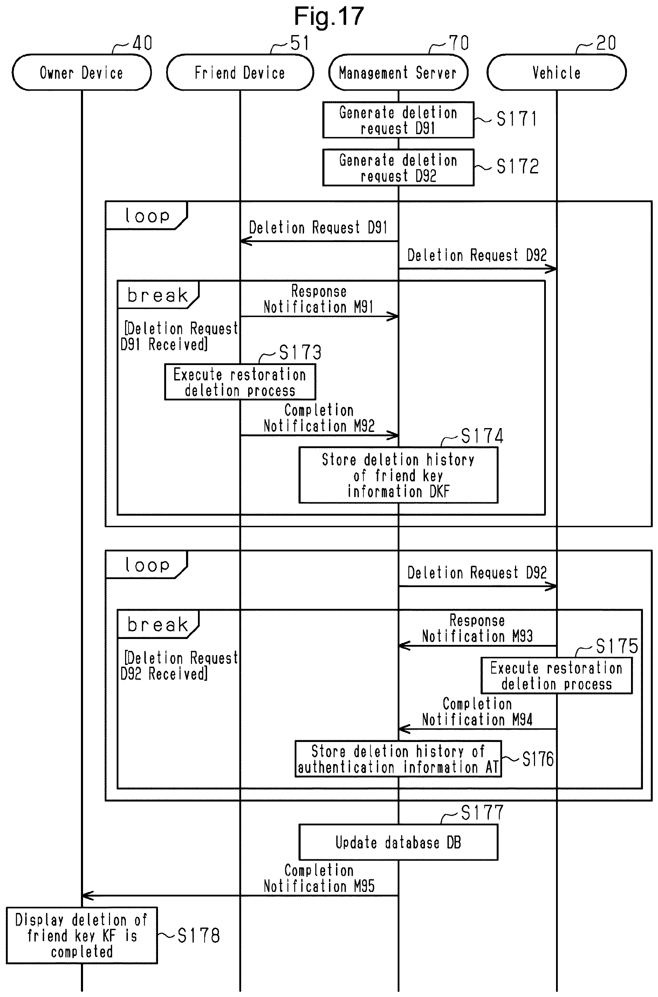

Fig. 17 shows an example of a series of processes executed by the management system 10 after the management server 70 detects that both the vehicle 20 and the friend device 51 are in a non-communicable state. The management system 10 executes a series of processes shown in Fig. 16 and then a series of processes shown in Fig. 17.

After detecting that both the vehicle 20 and the friend device 51 are in a non-communicable state, the management server 70 executes the process of step S171. In step S171, the management server 70 generates a deletion request D91. The deletion request D91 includes information indicating that the request is retransmitted in addition to the deletion request D62 shown in Fig 16. The deletion request D91 includes information indicating the time at which the deletion request D62 was transmitted.

Then, the management server 70 executes the process of step S172. In step S172, the management server 70 generates a deletion request D92. The deletion request D92 includes information indicating that the request is retransmitted in addition to the deletion request D63 shown in Fig 16. The deletion request D92 includes information indicating the time at which the deletion request D63 was transmitted.

As shown in Fig. 17, after execution of the process of step S171, the management server 70 repeatedly transmits the deletion request D91 toward the friend device 51. When the friend device 51 is restored from the non-communicable state to a communicable state, the friend device 51 becomes receivable the deletion request from the management server 70. The management server 70 continues to transmit the deletion request D91 until the friend device 51 is restored to the communicable state.

As shown in Fig. 17, after execution of the process of step S172, the management server 70 repeatedly transmits the deletion request D92 toward the vehicle 20. When the vehicle 20 is restored from the non-communicable state to a communicable state, the vehicle 20 may receive the deletion request from the management server 70. The management server 70 continues to transmit the deletion request D92 until the vehicle 20 is restored to the communicable state.

In Fig. 17, the friend device 51 is restored to the communicable state and receives the deletion request D91 before the vehicle 20. Upon receiving the deletion request D91, the friend device 51 transmits a response notification M91 toward the management server 70. The response notification M91 indicates that the friend device 51 has received the deletion request D91. When receiving the response notification M91, the management server 70 stops transmitting the deletion request D91.

Upon receiving the deletion request D91, the friend device 51 executes the process of step S173. In step S173, the friend device 51 executes a restoration deletion process.

### Restoration Deletion Process Executed by the Friend Device 51

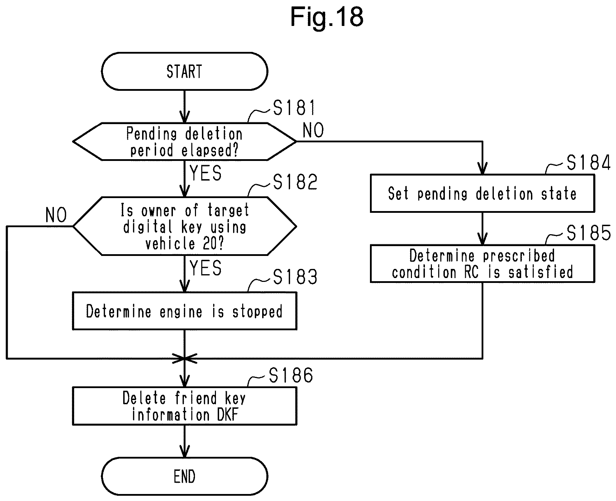

Fig. 18 shows a mode in which the friend device 51 executes the restoration deletion process. In step S173 shown in Fig. 17, the friend device 51 executes a series of processes shown in Fig. 18.

As shown in Fig. 18, the friend device 51 first executes the process of step S181. In the process of step S181, the friend device 51 determines whether the pending deletion period has elapsed from when the deletion request was transmitted toward the friend device 51 for the first time until the friend device 51 receives the deletion request D91. The period from when the deletion request is transmitted toward the friend device 51 for the first time until the friend device 51 receives the deletion request D91 is referred to as a reception delay period.

The deletion request D62 refers to a deletion request that is transmitted toward the friend device 51 for the first time in the management system 10. In the process of step S181, the friend device 51 determines whether the reception delay period is longer than the pending deletion period. In this process, the friend device 51 makes the determination based on information included in the deletion request D91 indicating the time at which the deletion request D62 was transmitted.

When the reception delay period is less than or equal to the pending deletion period, the friend device 51 determines that the pending deletion period has not elapsed. When determining that the pending deletion period has not elapsed (step

S181: NO), the friend device 51 advances the process to step S184. In step S184, the friend device 51 sets the friend key KF in the storage device 37 to the pending deletion state. This process is the same as the process executed by the friend device 51 in step S95 in Fig. 10.

After execution of the process of step S184, when the prescribed condition RC is satisfied, the friend device 51 executes the process of step S185. The friend device 51 determines that the prescribed condition RC is satisfied when the pending deletion period has elapsed from when the deletion request D62 is transmitted. In step S185, the friend device 51 determines that the prescribed condition RC is satisfied.

After execution of the process of step S185, the friend device 51 executes the process of step S186. In step S186, the friend device 51 deletes the friend key information DKF. This process is the same as the process executed by the friend device 51 in step S99 in Fig. 10. Then, the friend device 51 terminates a series of processes shown in Fig. 18.

When the reception delay period is longer than the pending deletion period, the friend device 51 determines that the pending deletion period has elapsed. When determining that the pending deletion period has elapsed (step S181: YES), the friend device 51 advances the process to step S182.

In the process of step S182, the friend device 51 determines whether the person owning a target digital key is using the vehicle 20. The target digital key refers to a digital key that is subject to deletion. In the processes shown in Figs. 16 and 17, the target digital key is the friend key KF, which is the target of the deletion reservation request D61. The device 30 storing the key information DK of the target digital key is referred to as a target device. In the processes shown in Figs. 16 and 17, the target device is the friend device 51. The friend key information DKF, which is deleted in the process of step S186, is related to the target digital key, that is, second target key-related information.

As described above, while the authentication is in the completion state, the digital key is allowed to control the vehicle 20. When the authentication of the friend key KF registered for the friend device 51 is in the completion state, the friend device 51 determines that the owner of the target digital key is using the vehicle 20.

When determining that the owner of the target digital key is not using the vehicle 20 (step S182: NO), the friend device 51 advances the process to step S186. In step S186, the friend device 51 deletes the friend key information DKF. Then, the friend device 51 terminates a series of processes shown in Fig. 18.

As described above, under a certain condition, upon receiving a deletion request, the friend device 51 deletes the friend key information DKF without waiting for the pending deletion period to elapse.

When determining that the owner of the target digital key is using the vehicle 20 (step S182: YES), the friend device 51 advances the process to step S183. In step S183, the friend device 51 determines that the engine of the vehicle 20 is stopped. In an example, the friend device 51 communicates with the vehicle 20 through the BLE communication. If receiving a message indicating that the engine is stopped from the vehicle 20 through the communication, the friend device 51 determines that the engine is stopped.

After execution of the process of step S183, the friend device 51 executes the process of step S186. As described above, in step S186, the friend device 51 deletes the friend key information DKF. Then, the friend device 51 terminates a series of processes shown in Fig. 18.

As described above, even when it is determined in step S181 that the pending deletion period has elapsed, if the owner of the target digital key is using the vehicle 20, the friend device 51 does not delete the friend key information DKF until the engine stops.

### Process Executed after Detection of a Non-Communicable State (up to Step S175)

As shown in Fig. 17, after execution of the process of step S173, the friend device 51 transmits a completion notification M92 to the management server 70 to indicate that deletion is completed in accordance with the deletion request D91.

Upon receiving the completion notification M92 from the friend device 51, the management server 70 executes the process of step S174. In step S174, the management server 70 stores a history of deletion of the friend key information DKF from the friend device 51. This process is the same as that of step S102 in Fig. 10.

Even after receiving the response notification M91 from the friend device 51, the management server 70 continues to transmit the deletion request D92 to the vehicle 20.

In Fig. 17, after the friend device 51 is restored to a communicable state, the vehicle 20 is restored to a communicable state and receives the deletion request D92. Upon receiving the deletion request D92, the vehicle 20 transmits a response notification M93 toward the management server 70. The response notification M93 indicates that the vehicle 20 has received the deletion request D92. When receiving the response notification M93, the management server 70 stops transmitting the deletion request D92.

Upon receiving the deletion request D92, the vehicle 20 executes the process of step S175. In step S175, the vehicle 20 executes the restoration deletion process.

### Restoration Deletion Process Executed by the Vehicle 20

In step S175, the vehicle 20 executes the restoration deletion process in the manner described with reference to Fig. 15. The restoration deletion process executed by the vehicle 20 to delete the friend key KF will be described with reference to Fig. 15.

As shown in Fig. 15, the vehicle 20 first executes the process of step S151. In the process of step S151, the vehicle 20 determines whether the pending deletion period has elapsed from when the deletion request was transmitted toward the vehicle 20 for the first time until the vehicle 20 received the deletion request D92. The period from when the deletion request is transmitted toward the vehicle 20 for the first time until the vehicle 20 receives the deletion request D92 is referred to as the reception delay period.

The deletion request D63 refers to a deletion request that is transmitted toward the vehicle 20 for the first time in the management system 10. In the process of step S151, the vehicle 20 determines whether the reception delay period is longer than the pending deletion period. In this process, the vehicle 20 makes the determination based on information included in the deletion request D92 indicating the time at which the deletion request D63 was transmitted.

When the reception delay period is less than or equal to the pending deletion period, the vehicle 20 determines that the pending deletion period has not elapsed. When determining that the pending deletion period has not elapsed (step S151: NO), the vehicle 20 advances the process to step S154. In step S154, the vehicle 20 sets the friend key KF in the storage device 28 to the pending deletion state. This process is the same as the process executed by the vehicle 20 in step S97 shown in Fig 10.

After execution of the process of step S154, when the prescribed condition RC is satisfied, the vehicle 20 executes the process of step S155. The vehicle 20 determines that the prescribed condition RC is satisfied when the pending deletion period has elapsed from when the deletion request D63 is transmitted. In step S155, the vehicle 20 determines that the prescribed condition RC is satisfied.

After execution of the process of step S155, the vehicle 20 executes the process of step S156. In step S156, the vehicle 20 deletes the authentication information AT. The authentication information AT, which is deleted in the process of step S156, is related to the target digital key, that is, first target key-related information. This process is the same as the process executed by the vehicle 20 in step S101 shown in Fig 10. Then, the vehicle 20 terminates the series of processes shown in Fig. 15.

When the reception delay period is longer than the pending deletion period, the vehicle 20 determines that the pending deletion period has elapsed. When determining that the pending deletion period has elapsed (step S151: YES), the vehicle 20 advances the process to step S152.

In the process of step S152, the vehicle 20 determines whether the person owning the target digital key is using the vehicle 20.

While the authentication is in the completion state, the digital key is allowed to control the vehicle 20. When the authentication of the friend key KF for which deletion is requested is in the completion state, the vehicle 20 determines that the owner of the target digital key is using the vehicle 20.

When determining that the owner of the target digital key is not using the vehicle 20 (step S152: NO), the vehicle 20 advances the process to step S156. In step S156, the vehicle 20 deletes the authentication information AT. Then, the vehicle 20 terminates the series of processes shown in Fig. 15.

As described above, under a certain condition, upon receiving the deletion request, the vehicle 20 deletes the authentication information AT without waiting for the pending deletion period to elapse.

When determining that the owner of the target digital key is using the vehicle 20 (step S152: YES), the vehicle 20 advances the process to step S153. In step S153, the vehicle 20 determines that the engine of the vehicle 20 is stopped.

After execution of the process of step S153, the vehicle 20 executes the process of step S156. As described above, in step S156, the vehicle 20 deletes the authentication information AT. Then, the vehicle 20 terminates the series of processes shown in Fig. 15.

### Process Executed after Detection of a Non-Communicable State (from Step S175)

As shown in Fig. 17, after execution of the process of step S175, the vehicle 20 transmits a completion notification M94 to the management server 70 to indicate that deletion of the authentication information AT is completed in accordance with the deletion request D92.

Upon receiving the completion notification M94 from the vehicle 20, the management server 70 executes the process of step S176. In step S176, the management server 70 stores a history of deletion of the authentication information AT for authenticating the friend key KN, which is the target of deletion. This process is the same as that of step S103 in Fig. 10.

After execution of the process of steps S174 and S176, the management server 70 executes the process of step S177. In step S177, the management server 70 updates the database DB. This process is the same as the process executed by the management server 70 in step S104 shown in Fig 10. Thereafter, the management server 70 transmits a completion notification M95 to the owner device 40 to indicate that deletion of the friend key KF in accordance with the deletion reservation request D61 is completed.

Upon receiving the completion notification M95, the owner device 40 executes the process of step S178. In step S178, the owner device 40 presents, to the HMI 32, information indicating that deletion of the friend key KF, which is the target of the deletion reservation request D61, is completed. This process is the same as the process executed by the owner device 40 in step S105 in Fig. 10. Then, the management system 10 terminates the current series of processes for deleting the friend key KF.

In Fig. 17, the friend device 51 is restored to the communicable state and receives the deletion request D91 before the vehicle 20. Alternatively, the vehicle 20 may be restored to the communicable state and receive the deletion request D92 before the friend device 51. In this case, the management server 70 executes the process of steps S174 and S176 in reverse order.

In Fig. 17, even after receiving the completion notification M92 from the friend device 51, the management server 70 continues to transmit the deletion request D92. Instead, in the management system 10, before one of the vehicle 20 and the friend device 51 transmits a completion notification in response to receipt of the deletion request, the other one of the vehicle 20 and the friend device 51 may be restored to the communicable state.

### Effect of the Present Embodiment

When receiving a request to delete the target digital key, if both the vehicle 20 and the target device are in a non-communicable state, the management system 10 waits for at least one of the vehicle 20 and the target device to be restored to a communicable state and then transmits a deletion request.

### Advantages of the Present Embodiment

(1) Even when the vehicle 20 and the target device are offline at a point in time when deletion of the target digital key is requested, the management system 10 is configured to delete the target digital key.
(2) When both the target device and the vehicle 20 are in a non-communicable state at the time of transmitting a deletion request, the management system 10 repeatedly transmits the deletion request toward the target device until the target device is restored to a communicable state.

The management system 10 continues to transmit the deletion request until the target device comes back online. Thus, the management system 10 is configured to allow the target device to receive the deletion request when the target device comes back online.

(3) When both the target device and the vehicle 20 are in a non-communicable state at the time of transmitting a deletion request, the management system 10 repeatedly transmits the deletion request toward the vehicle 20 until the vehicle 20 is restored to a communicable state.

The management system 10 continues to transmit the deletion request until the vehicle 20 comes back online. The management system 10 is configured so that when the vehicle 20 comes online, the vehicle 20 receives the deletion request.

(4) The vehicle 20 and the target device each delete the stored target key-related information from itself when the pending deletion period elapses after receipt of the deletion request. When restoring to the communicable state from the non-communicable state and then receiving a deletion request, the vehicle 20 and the target device each delete the stored target key-related information from itself if the reception delay period is longer than the pending deletion period regardless of whether the pending deletion period has elapsed after receipt of the deletion request.

In general, even when receiving a deletion request, the vehicle 20 and the target device do not delete the target key-related information until the pending deletion period elapses. When the vehicle 20 or the target device come back online and then a deletion request is transmitted, the target key-related information may not be deleted even in a situation in which the pending deletion period would have elapsed if the vehicle 20 and the target device were constantly online. In this regard, when the vehicle 20 and the target device come back online and then receive a deletion request, the vehicle 20 and the target device delete the target key-related information regardless of whether the pending deletion period has elapsed. Thus, the management system 10 limits extension of the pending deletion period.

(5) The vehicle 20 and the target device may be restored from a non-communicable state to a communicable state and then receive a deletion request. In this case, even when the reception delay period is longer than the pending deletion period, if the owner of the target digital key is using the vehicle 20, the vehicle 20 and the target device do not delete the target key-related information until the engine of the vehicle 20 is stopped.

While the owner of the target digital key is using the vehicle 20, if the target digital key were unexpectedly deleted, the owner would also become unable to use the vehicle 20. In this regard, when the owner of the target digital key is using the vehicle 20, the management system 10 waits for the engine to stop running and then deletes the target key-related information. Thus, the management system 10 avoids unexpected deletion of the target digital key when the owner of the target digital key is using the vehicle 20.

(6) If the management server 70 cannot communicate with the vehicle 20 and the target device when receiving a request to delete the target digital key, the management server 70 waits for at least one of the vehicle 20 and the target device to be restored to a communicable state and then transmits a deletion request. This allows the management server 70 to delete the target digital key even when the vehicle 20 and the target device are offline at a point in time when deletion of the target digital key is requested.

(7) When the management server 70 cannot communicate with the target device and the vehicle 20 at the time of transmitting a deletion request, the management server 70 repeatedly transmits the deletion request toward the target device until the target device is restored to the communicable state.

The management server 70 continues to transmit the deletion request until the target device comes back online. This allows the management server 70 to transmit the deletion request to the target device when the target device comes back online.

(8) When the management server 70 cannot communicate with the target device and the vehicle 20 at the time of transmitting a deletion request, the management server 70 repeatedly transmits the deletion request toward the vehicle 20 until the vehicle 20 is restored to the communicable state.

The management server 70 continues to transmit the deletion request until the vehicle 20 comes back online. This allows the management server 70 to transmit the deletion request to the vehicle 20 when the vehicle 20 comes back online.

(9) If the management server 70 cannot communicate with the vehicle 20 and the target device when receiving a request to delete the target digital key, the management server 70 waits for at least one of the vehicle 20 and the target device to be restored to a communicable state and then transmits a deletion request in accordance with the deletion program PC. Thus, even when the vehicle 20 and the target device are offline at a point in time when deletion of the target digital key is requested, the target digital key is deleted by the deletion program PC.

(10) The present embodiment also provides a method for deleting a target digital key, which is one of multiple digital keys that is to be deleted. The vehicle 20 stores first key-related information. The device 30 stores second key-related information. The management server 70 manages registration of the digital keys. A digital key is allowed to control the vehicle 20 when the first key-related information and the second key-related information of the digital key are stored in the vehicle 20 and the device 30, respectively. The deletion method includes (steps S69 and S99) transmitting a deletion request from the management server 70 to a target device that stores second target key-related information, which is the second key-related information of the target digital key, to delete the second target key-related information from the target device. The deletion method includes (steps S71 and S101) transmitting a deletion request from the management server 70 to the vehicle 20 to delete the first target key-related information, which is the first key-related information of the target digital key, from the vehicle 20. When the management server 70 transmits a deletion request, if both the target device and the vehicle 20 are in a non-communicable state, the deletion method includes retransmitting a deletion request (the deletion requests D81 and D82 shown in Fig. 13, and the deletion requests D91 and D92 shown in Fig. 17) when at least one of the target device and the vehicle 20 is restored to a communicable state.

When receiving a request to delete the target digital key, if both the vehicle 20 and the target device are in a non-communicable state, the management server 70 waits for at least one of the vehicle 20 and the target device to be restored to a communicable state and then transmits a deletion request. Thus, even when the vehicle 20 and the target device are offline at a point in time when deletion of the target digital key is requested, the target digital key is deleted.

### Other Embodiments

The embodiment described above may be modified as follows. The embodiment and the following modified examples may be combined as long as the combined modified examples remain technically consistent with each other.

### Management System 10

The vehicle 20 may lack some of the BLE module 23, the UWB module 24, and the NFC module 25. The vehicle 20 is configured to perform short-range communication with the device 30 as long as the vehicle 20 includes at least one module. The vehicle 20 may include a module other than those listed above, provided that the module is configured to perform short-range communication with the device 30.

The digital key-related aspects in the above-described embodiment need not conform to the CCC standard.

The vehicle management device 26 does not have to be a digital key ECU. The vehicle management device 26 may be, for example, a central ECU that integrally manages multiple ECUs included in the vehicle 20.

In the above-described embodiment, the vehicle management device 26 is provided with the execution device 27, which is processing circuitry including one or more processors that run computer programs (software) to execute various processes. However, the vehicle management device 26 may be provided with processing circuitry including one or more dedicated hardware circuits, such as application-specific integrated circuits (ASICs) that execute at least some of the processes. Alternatively, the vehicle management device 26 may be provided with processing circuitry including a combination of one or more processors and one or more dedicated hardware circuits. Each processor includes a CPU and memory such as RAM and ROM. The memory stores program codes or commands configured to cause the CPU to execute processes. The memory, namely, a computer-readable medium, includes any available medium that is accessible by a general-purpose or special-purpose computer. The same applies to the devices 30 and the management server 70.

The devices 30 are not limited to smartphones. The devices 30 may be smartwatches. The devices 30 may be prescribed servers. In this case, the devices 30 may be included in a prescribed server. For example, when a vehicle rental service provider or a vehicle sharing service provider is the owner of the vehicle 20, the owner device 40 may be included in a prescribed server. For example, the friend device 51 may be included in the prescribed server.

The shareable device 50 has a function of receiving the shareable key KS as in the above-described embodiment. A device 30 that is configured to receive a digital key, such as a shareable device 50, may be referred to as a receiver device.

In the above embodiment, the owner key KO, the friend key KF, and the guest key KN are ranked in this order. A digital key having a relatively high rank is set to a relatively high degree of authority. However, a digital key having a relatively high rank does not need to be set to a relatively high degree of authority. For example, the owner key KO, the friend key KF, and the guest key KN, being in three different ranks, may be set to the same degree of authority.

A separate device server 60 does not have to be provided for each type of device 30. It is sufficient that the multiple devices 30 and the management server 70 wirelessly communicate with each other. The device server 60 may be omitted. It is sufficient that the multiple devices 30 and the management server 70 communicate directly via wireless communication.

The management server 70 may include multiple servers. For example, the management server 70 may include a server that stores the database DB and a server that executes a server program PS. In addition, for example, the management server 70 may include a server that communicates with the vehicle 20 and a server that communicates with the device server 60, and these servers may communicate with each other.

The management server 70 does not necessarily need to store the database DB. It is sufficient that the management server 70 manage at least a combination of the key information DK of the device 30 and the authentication information AT of the vehicle management device 26 for one digital key in the management system 10.

### Various Types of Information

The authentication information AT is not limited to the example of the above-described embodiment as long as it is information for authenticating digital keys when digital keys are used. For example, the authentication information AT may be a common key shared by the vehicle management device 26 and the device 30. Further, for example, the authentication information AT may be a shared secret key.

The configuration of the information included in the key information DK is not limited to the example of the above-described embodiment. For example, the owner key information DKO does not necessarily need to include the slot identification information ST4. Further, for example, the key information DK may include information indicating the type of the digital key. The type of the digital key is, for example, information indicating one of the owner key KO, the friend key KF, and the guest key KN.

The database DB may include information indicating the type of the devices 30. The type of the devices 30 is, for example, information indicating any one of a smartphone, a smartwatch, a prescribed server, and the like.

The structure of the data DA in the database DB is not limited to the example of the above-described embodiment. The database DB may be modified as long as it includes information necessary for the management server 70 to perform management in the management system 10.

In the database DB, the authority does not necessarily need to be uniformly determined in accordance with the type of the digital key, and may be set for each digital key. In the database DB, the authority does not necessarily need to be defined.

### Series of Processes for Registering Digital Keys

The series of processes for registering the owner key KO is not limited to the example in the above-described embodiment. For example, the owner device 40 does not have to perform the pairing process of step S12, and may store the owner key information DKO through exchange of information, such as the generation data DC, between the vehicle 20 and the first device 30A via the management server 70. The series of processes for registering the owner key KO may be appropriately modified to align with the configuration of the information included in the owner key information DKO and the configuration of the information included in the authentication information AT.

The series of processes for registering the friend keys KF is not limited to the example in the above-described embodiment. For example, the management server 70 may update the database DB through the process of step S29 after transmitting the authentication package ATP and the storage request D24 to the vehicle 20. The series of processes for registering the friend key KF may be appropriately modified to align with the configuration of the information included in the friend key information DKF and the configuration of the information included in the authentication information AT.

The series of processes for registering the guest keys KN is not limited to the example in the above-described embodiment. The order of processes may differ from the series of processes for registering the friend key KF in the above-described embodiment. The series of processes for registering the guest key KN may be appropriately modified to align with the configuration of the information included in the guest key information DKN and the configuration of the information included in the authentication information AT.

The types of digital keys do not necessarily need to include the guest keys KN. In other words, in the management system 10, the shareable key KS may be only the friend key KF.

The guest device 52 may be able to transmit a request to register a new guest key KN. In other words, the shareable device 50 may transmit a request to register a new guest key KN regardless of whether the shareable device 50 is the friend device 51 or the guest device 52. In this case, it is sufficient for the management system 10 to perform the registration for the new guest key KN using the series of processes shown in Fig. 7.

### Series of Processes for Deleting Digital Keys

In the above-described embodiment, when deleting the guest key KN, the friend device 51 transmits the deletion reservation request D41 to the management server 70. Then, when the prescribed condition RC is satisfied, deletion of the guest key KN is requested. Alternatively, the friend device 51 may transmit a request to delete the guest key KN to the management server 70 regardless of the prescribed condition RC. In addition to the friend device 51, the owner device 40 may request to delete the guest key KN, and the management server 70 may execute the process from step S62.

In the above-described embodiment, when deleting the friend key KF, the owner device 40 transmits the deletion reservation request D61 to the management server 70. Then, when the prescribed condition RC is satisfied, deletion of the friend key KF is requested. Alternatively, the owner device 40 may transmit a request to delete the friend key KF to the management server 70 regardless of the prescribed condition RC.

As shown in Fig. 9, when deleting the guest device 52 in response to operation on the guest device 52, a request to delete the guest key KN may be transmitted to the management server 70 before the completion notification M51 is transmitted to the management server 70. In this case, as in the flow shown in Fig. 8, upon receiving the request, the management server 70 may transmit a request to delete the guest key information DKN to the guest device 52.

As shown in Fig. 11, when deleting the friend device 51 in response to operation on the friend device 51, a request to delete the friend key KF may be transmitted to the management server 70 before the completion notification M71 is transmitted to the management server 70. In this case, as in the flow shown in Fig. 10, upon receiving the request, the management server 70 may transmit a request to delete the friend key information DKF to the friend device 51.

When the guest key KN is deleted in response to operation on the friend device 51 and when the guest key KN is deleted in response to operation on the guest device 52, a deletion reservation may be requested to the management server 70.

The owner device 40 and the vehicle 20 may request deletion of the guest key KN. Further, for example, the management server 70 may generate a deletion request for the guest key KN when a prescribed condition is satisfied.

The vehicle 20 may request to delete the friend key KF. Further, for example, the management server 70 may generate a deletion request for the friend key KF when a prescribed condition is satisfied.

When the friend device 51 requests to delete the guest key KN, the friend device 51 transmits the deletion reservation request D41 to the management server 70. Then, the management server 70 transmits a deletion request to the vehicle 20 and the guest device 52. Alternatively, the friend device 51 may directly transmit a deletion request to the vehicle 20 and the guest device 52. In this case, when both the vehicle 20 and the guest device 52 are in a non-communicable state, the friend device 51 repeatedly transmits the deletion request.

When the owner device 40 requests to delete the friend key KF, the owner device 40 transmits the deletion reservation request D61 to the management server 70. Then, the management server 70 transmits a deletion request to the vehicle 20 and the friend device 51. Alternatively, the owner device 40 may directly transmit a deletion request to the vehicle 20 and the friend device 51. In this case, when both the vehicle 20 and the friend device 51 are in a non-communicable state, the owner device 40 repeatedly transmits the deletion request.

In Fig. 14, when the reception delay period is longer than the pending deletion period, the guest device 52 deletes the guest key information DKN without waiting for the pending deletion period to elapse. Alternatively, when the reception delay period is longer than the pending deletion period, the guest device 52 may wait for the pending deletion period to elapse and then delete the guest key information DKN.

In Fig. 18, when the reception delay period is longer than the pending deletion period, the friend device 51 deletes the friend key information DKF without waiting for the pending deletion period to elapse. Alternatively, when the reception delay period is longer than the pending deletion period, the friend device 51 may wait for the pending deletion period to elapse and then delete the friend key information DKF.

In Fig. 15, when the reception delay period is longer than the pending deletion period, the vehicle 20 deletes the authentication information AT without waiting for the pending deletion period to elapse. Alternatively, when the reception delay period is longer than the pending deletion period, the vehicle 20 may wait for the pending deletion period to elapse since the deletion request is received and then delete the authentication information AT.

In Fig. 14, when the owner of the guest key KN is using the vehicle 20, the guest device 52 waits for the engine to stop running and then deletes the guest key information DKN. Alternatively, when the owner of the guest key KN is using the vehicle 20, the guest device 52 may delete the guest key information DKN without waiting for the engine to stop running.

In Fig. 18, when the owner of the friend key KF is using the vehicle 20, the friend device 51 waits for the engine to stop running and then deletes the friend key information DKF. Alternatively, when the owner of the friend key KF is using the vehicle 20, the friend device 51 may delete the friend key information DKF without waiting for the engine to stop running.

In Fig. 15, when the owner of the target digital key is using the vehicle 20, the vehicle 20 waits for the engine to stop running and then deletes the authentication information AT for the target digital key. Alternatively, when the owner of the target digital key is using the vehicle 20, the vehicle 20 may delete the authentication information AT for the target digital key without waiting for the engine to stop running.

In Figs. 8 and 13, upon receiving a deletion request, the guest device 52 transmits a response notification. However, the guest device 52 does not necessarily have to transmit the response notification. In this case, in Fig. 12, when the completion notification M44 is not received in a fixed period after transmission of the deletion request D42, the management server 70 determines that the guest device 52 is in a non-communicable state. In Fig. 13, when receiving the completion notification M82, the management server 70 stops transmitting the deletion request D81.

In Figs. 10 and 17, upon receiving a deletion request, the friend device 51 transmits a response notification. However, the friend device 51 does not necessarily have to transmit the response notification. In this case, in Fig. 16, when the completion notification M64 is not received in a fixed period after transmission of the deletion request D62, the management server 70 determines that the friend device 51 is in a non-communicable state. In Fig. 17, when receiving the completion notification M92, the management server 70 stops transmitting the deletion request D91.

In Figs. 8, 10, 13, and 17, upon receiving a deletion request, the vehicle 20 transmits a response notification. However, the vehicle 20 does not necessarily have to transmit the response notification.

In this case, in Fig. 12, when the completion notification M45 is not received in a fixed period after transmission of the deletion request D43, the management server 70 determines that the vehicle 20 is in a non-communicable state. In Fig. 13, when receiving the completion notification M84, the management server 70 stops transmitting the deletion request D82.

In this case, in Fig. 16, when the completion notification M65 is not received in a fixed period after transmission of the deletion request D63, the management server 70 determines that the vehicle 20 is in a non-communicable state. In Fig. 17, when receiving the completion notification M94, the management server 70 stops transmitting the deletion request D92.

In the embodiment, when the vehicle 20 and the target device are in a non-communicable state, the management server 70 repeatedly transmits the deletion request to the vehicle 20 and the target device. When the vehicle 20 and the target device are in a non-communicable state, the management server 70 may transmit the deletion request in a manner differing from that described in the embodiment.

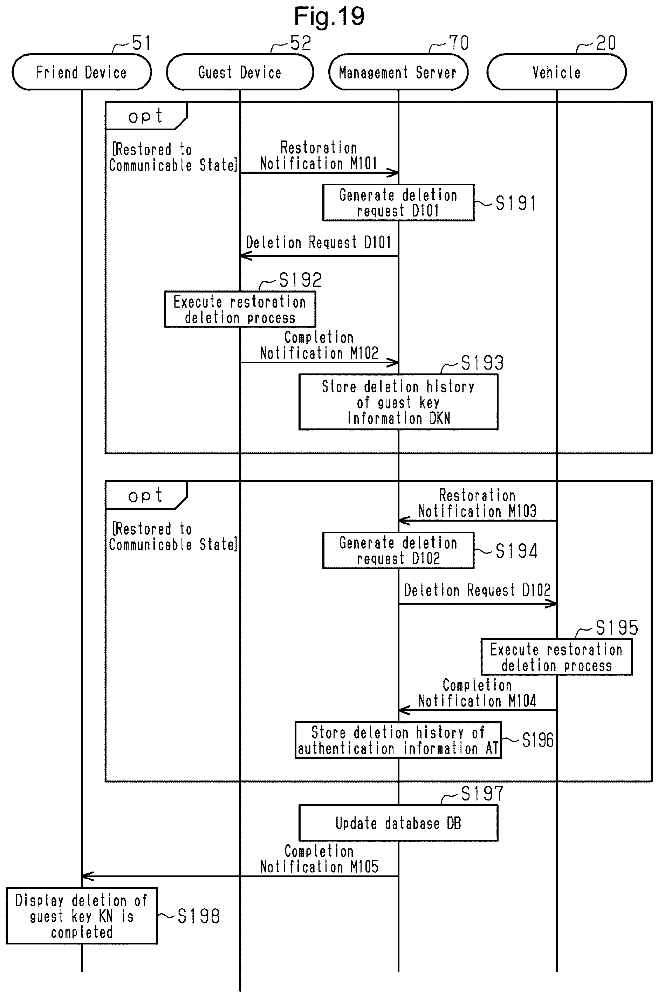

Fig. 19 shows an example of a series of processes executed by a modified example of a management system 10 after the management server 70 detects that both the vehicle 20 and the guest device 52 are in a non-communicable state. In Fig. 19, the friend device 51 requests to delete the guest key KN. The management system 10 of the modified example executes a series of processes shown in Fig. 12 and then a series of processes shown in Fig. 19 instead of executing a series of processes shown in Fig. 13. In the following description, processes executed by the execution device 27 are described as processes executed by the vehicle 20. The processes executed by the execution device 36 will be described as processes executed by the device 30. The processes executed by the execution device 71 will be described as processes executed by the management server 70. In the following description, the deletion program PC causes the execution device 71 to execute the processes executed in the management server 70.

In Fig. 19, the guest device 52 is restored to a communicable state before the vehicle 20. When restored to the communicable state, the guest device 52 transmits a restoration notification M101 toward the management server 70. The restoration notification M101 indicates that the guest device 52 has been restored from the non-communicable state to the communicable state.

Upon receiving the restoration notification M101, the management server 70 executes the process of step S191. In step S191, the management server 70 generates a deletion request D101. The deletion request D101 includes information indicating that the request is retransmitted in addition to the deletion request D42 shown in Fig 12. The deletion request D101 includes information indicating the time at which the deletion request D42 was transmitted. The management server 70 transmits the generated deletion request D191 toward the guest device 52.

Upon receiving the deletion request D101, the guest device 52 executes the process of step S 192. In step S 192, the guest device 52 executes the restoration deletion process in the manner shown in Fig. 14. Thereafter, the guest device 52 transmits a completion notification M102 toward the management server 70 to indicate that the deletion is completed in accordance with the deletion request D101.

When the management server 70 receives the completion notification M102 from the guest device 52, the management server 70 executes the process of step S193. In step S193, the management server 70 stores a history of deletion of the guest key information DKN from the guest device 52. This process is the same as that of step S72 in Fig. 8.

In Fig. 19, after the guest device 52 is restored to a communicable state, the vehicle 20 is restored to a communicable state. When restored to the communicable state, the vehicle 20 transmits a restoration notification M103 toward the management server 70. The restoration notification M103 indicates that the vehicle 20 has been restored from the non-communicable state to the communicable state.

Upon receiving the restoration notification M103, the management server 70 executes the process of step S194. In step S194, the management server 70 generates a deletion request D102. The deletion request D102 includes information indicating that the request is retransmitted in addition to the deletion request D43 shown in Fig 12. The deletion request D102 includes information indicating the time at which the deletion request D43 was transmitted. The management server 70 transmits the generated deletion request D102 toward the vehicle 20.

Upon receiving the deletion request D102, the vehicle 20 executes the process of step S195. In step S195, the vehicle 20 executes the restoration deletion process in the manner shown in Fig 15. Thereafter, the vehicle 20 transmits a completion notification M104 to the management server 70 to indicate that the deletion is completed in accordance with the deletion request D102.

Upon receiving the completion notification M104 from the vehicle 20, the management server 70 executes the process of step S196. In step S196, the management server 70 stores a history of deletion of the authentication information AT for authenticating the guest key KN, which is the target of deletion. This process is the same as that of step S73 in Fig. 8.

After execution of the process of steps S193 and S196, the management server 70 executes the process of step S197. In step S197, the management server 70 updates the database DB. This process is the same as the process executed by the management server 70 in step S74 shown in Fig 8. Thereafter, the management server 70 transmits a completion notification M105 to the friend device 51 to indicate that deletion of the guest key KN in accordance with the deletion reservation request D41 is completed.

Upon receiving the completion notification M105, the friend device 51 executes the process of step S198. In step S198, the friend device 51 presents, to the HMI 32, information indicating that deletion of the guest key KN, which is the target of the deletion reservation request D41, is completed. This process is the same as the process executed by the friend device 51 in step S75 in Fig. 8. Then, the management system 10 terminates the current series of processes for deleting the guest key KN.

In Fig. 19, the guest device 52 is restored to the communicable state before the vehicle 20. Alternatively, the vehicle 20 may be restored to the communicable state before the guest device 52. In this case, the management server 70 executes the process of steps S193 and S196 in reverse order.

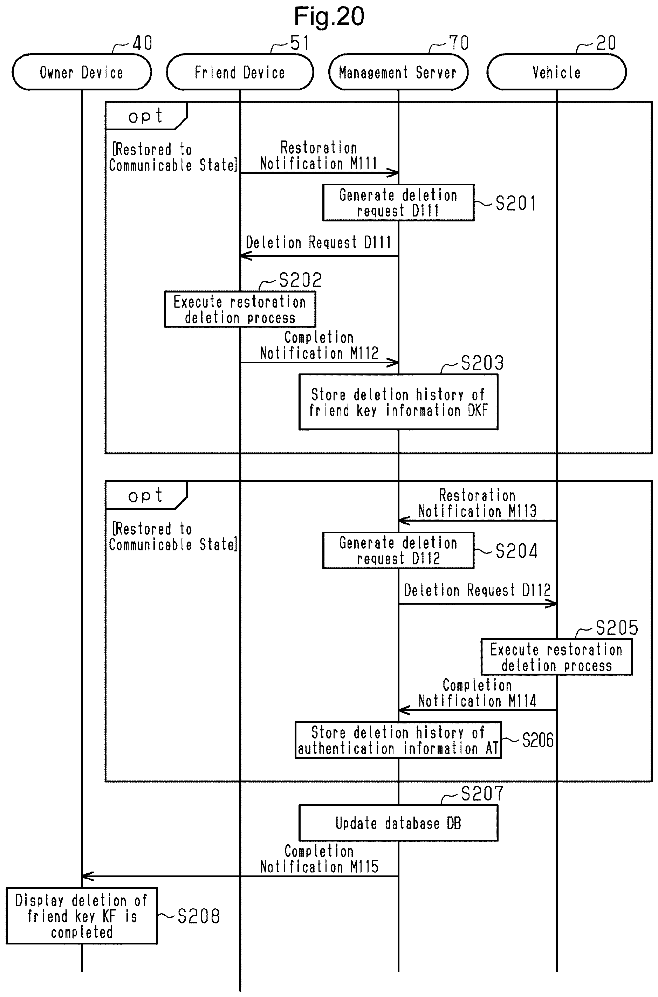

Fig. 20 shows an example of a series of processes executed by a modified example of a management system 10 after the management server 70 detects that both the vehicle 20 and the friend device 51 are in a non-communicable state. In Fig. 20, the owner device 40 requests to delete the friend key KF. The management system 10 of the modified example executes a series of processes shown in Fig. 16 and then a series of processes shown in Fig. 20 instead of executing a series of processes shown in Fig. 17. In the following description, processes executed by the execution device 27 are described as processes executed by the vehicle 20. The processes executed by the execution device 36 will be described as processes executed by the device 30. The processes executed by the execution device 71 will be described as processes executed by the management server 70. In the following description, the deletion program PC causes the execution device 71 to execute the processes executed in the management server 70.

In Fig. 20, the friend device 51 is restored to the communicable state before the vehicle 20. When restored to the communicable state, the friend device 51 transmits a restoration notification M111 toward the management server 70. The restoration notification M111 indicates that the friend device 51 has been restored from the non-communicable state to the communicable state.

Upon receiving the restoration notification M111, the management server 70 executes the process of step S201. In step S201, the management server 70 generates a deletion request D111. The deletion request D111 includes information indicating that the request is retransmitted in addition to the deletion request D62 shown in Fig 16. The deletion request D111 includes information indicating the time at which the deletion request D62 was transmitted. The management server 70 transmits the deletion request D111 toward the friend device 51.

Upon receiving the deletion request D111, the friend device 51 executes the process of step S202. In step S202, the friend device 51 executes the restoration deletion process in the manner shown in Fig. 18. Thereafter, the friend device 51 transmits a completion notification M112 toward the management server 70 to indicate that the deletion is completed in accordance with the deletion request D111.

Upon receiving the completion notification M102 from the friend device 51, the management server 70 executes the process of step S203. In step S203, the management server 70 stores a history of deletion of the friend key information DKF from the friend device 51. This process is the same as that of step S102 in Fig. 10.

In Fig. 20, after the friend device 51 is restored to a communicable state, the vehicle 20 is restored to a communicable state. When restored to the communicable state, the vehicle 20 transmits a restoration notification M113 toward the management server 70. The restoration notification M113 indicates that the vehicle 20 has been restored from the non-communicable state to the communicable state.

Upon receiving the restoration notification M113, the management server 70 executes the process of step S204. In step S204, the management server 70 generates a deletion request D112. The deletion request D112 includes information indicating that the request is retransmitted in addition to the deletion request D63 shown in Fig 16. The deletion request D112 includes information indicating the time at which the deletion request D63 was transmitted. The management server 70 transmits the generated deletion request D112 toward the vehicle 20.

Upon receiving the deletion request D112, the vehicle 20 executes the process of step S205. In step S205, the vehicle 20 executes the restoration deletion process in the manner shown in Fig 15. Thereafter, the vehicle 20 transmits a completion notification M114 to the management server 70 to indicate that the deletion is completed in accordance with the deletion request D112.

Upon receiving the completion notification M114 from the vehicle 20, the management server 70 executes the process of step S206. In step S206, the management server 70 stores a history of deletion of the authentication information AT for authenticating the friend key KN, which is the target of deletion. This process is the same as that of step S103 in Fig. 10.

After execution of the process of steps S203 and S206, the management server 70 executes the process of step S207. In step S207, the management server 70 updates the database DB. This process is the same as the process executed by the management server 70 in step S104 shown in Fig 10. Thereafter, the management server 70 transmits a completion notification M115 to the owner device 40 to indicate that deletion of the friend key KF in accordance with the deletion reservation request D61 is completed.

Upon receiving the completion notification M115, the owner device 40 executes the process of step S208. In step S208, the owner device 40 presents, to the HMI 32, information indicating that deletion of the friend key KF, which is the target of the deletion reservation request D61, is completed. This process is the same as the process executed by the owner device 40 in step S105 in Fig. 10. Then, the management system 10 terminates the current series of processes for deleting the friend key KF.

In Fig. 20, the friend device 51 is restored to the communicable state before the vehicle 20. Alternatively, the vehicle 20 may be restored to the communicable state before the friend device 51. In this case, the management server 70 executes the process of steps S203 and S206 in reverse order.

In this case, when the target device is restored from a non-communicable state to a communicable state, the target device transmits a restoration notification indicating that the target device has been restored to a communicable state. When the target device transmits the restoration notification, the management system 10 transmits a deletion request toward the target device. Thus, the management system 10 transmits a deletion request when the target device is restored to a communicable state.

In this case, when the vehicle 20 is restored from a non-communicable state to a communicable state, the vehicle 20 transmits a restoration notification indicating that the vehicle 20 has been restored to a communicable state. When the vehicle 20 transmits the restoration notification, the management system 10 transmits a deletion request toward the vehicle 20. Thus, the management system 10 transmits a deletion request when the vehicle 20 is restored to a communicable state.

In this case, when the target device is restored from a non-communicable state to a communicable state, the target device transmits a restoration notification indicating that the target device has been restored to a communicable state. When receiving the restoration notification from the target device, the management server 70 transmits a deletion request toward the target device. Thus, the management server 70 transmits a deletion request when the target device is restored to a communicable state.

When the vehicle 20 is restored from a non-communicable state to a communicable state, the vehicle 20 transmits a restoration notification indicating that the vehicle 20 has been restored to a communicable state. When receiving the restoration notification from the vehicle 20, the management server 70 transmits a deletion request toward the vehicle 20. Thus, the management server 70 transmits a deletion request when the vehicle 20 is restored to a communicable state.

In Fig. 19, instead of the management server 70, the friend device 51 may receive the restoration notification M101 from the guest device 52. In this case, the friend device 51 generates a deletion request D101 and transmits the deletion request D101 toward the guest device 52.

In Fig. 19, instead of the management server 70, the friend device 51 may receive the restoration notification M103 from the vehicle 20. In this case, the friend device 51 generates a deletion request D102 and transmits the deletion request D102 toward the vehicle 20.

In Fig. 20, instead of the management server 70, the owner device 40 may receive the restoration notification M111 from the friend device 51. In this case, the owner device 40 may generate a deletion request D111 and transmit the deletion request D111 toward the friend device 51.

In Fig. 20, instead of the management server 70, the owner device 40 may receive the restoration notification M113 from the vehicle 20. In this case, the owner device 40 generates a deletion request D112 and transmits the deletion request D112 toward the vehicle 20.

When the vehicle 20 and the target device are in a non-communicable state, the management server 70 may repeatedly transmit a deletion request to the vehicle 20, while transmitting a deletion request to the target device upon receipt of a restoration notification from the target device. When the vehicle 20 and the target device are in a non-communicable state, the management server 70 may repeatedly transmit a deletion request to the target device, while transmitting a deletion request to the vehicle 20 upon receipt of a restoration notification from the vehicle 20.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A management system (10), comprising:
a vehicle (20);
multiple devices (30); and
a management server (70), wherein
the vehicle (20) is configured to store first key-related information related to each of digital keys,
each of the devices (30) is configured to store second key-related information related to at least one of the digital keys,
the management server (70) is configured to manage registration of the digital keys to the vehicle (20),
each digital key of the digital keys is configured to control the vehicle (20) when the first key-related information related to the digital key is stored in the vehicle (20) and the second key-related information related to the digital key is stored in one of the devices (30),
in response to a request to delete a target digital key, the target digital key being one of the digital keys that is a target of deletion, the management system (10) is configured to:
transmit a deletion request to a target device storing second target key-related information, thereby deleting the second target key-related information from the target device, the second target key-related information being the second key-related information related to the target digital key; and
transmit the deletion request to the vehicle (20), thereby deleting first target key-related information from the vehicle (20), the first target key-related information being the first key-related information related to the target digital key, and
when transmitting the deletion request, if both the target device and the vehicle (20) are in a non-communicable state, the management system (10) is further configured to retransmit the deletion request when at least one of the target device and the vehicle (20) is restored to a communicable state.

2. The management system (10) according to claim 1, wherein when transmitting the deletion request, if both the target device and the vehicle (20) are in a non-communicable state, the management system (10) is configured to repeatedly transmit the deletion request toward the target device until the target device is restored to a communicable state.

3. The management system (10) according to claim 1 or 2, wherein when transmitting the deletion request, if both the target device and the vehicle (20) are in a non-communicable state, the management system (10) is configured to repeatedly transmit the deletion request to the vehicle (20) until the vehicle (20) is restored to a communicable state.

4. The management system (10) according to claim 1 or 3, wherein
upon restoration from the non-communicable state to the communicable state, the target device is configured to transmit a restoration notification, and
when the target device transmits the restoration notification, the management system (10) is configured to transmit the deletion request toward the target device.

5. The management system (10) according to any one of claims 1, 2 and 4, wherein
upon restoration from the non-communicable state to the communicable state, the vehicle (20) is configured to transmit a restoration notification, and
when the vehicle (20) transmits the restoration notification, the management system (10) is configured to transmit the deletion request toward the vehicle (20).

6. The management system (10) according to any one of claims 1 to 5, wherein each of the vehicle (20) and the target device is configured to
delete the target key-related information that is stored in itself when a pending deletion period elapses after receipt of the deletion request,
determine whether a reception delay period is longer than the pending deletion period when restoring from the non-communicable state to the communicable state and then receiving the deletion request, the reception delay period being from when the deletion request is initially transmitted to when the deletion request is received, and
when determining that the reception delay period is longer than the pending deletion period, delete the target key-related information that is stored in itself regardless of whether the pending deletion period has elapsed after receipt of the deletion request.

7. The management system (10) according to claim 6, wherein each of the vehicle (20) and the target device is configured to not delete the target key-related information stored in itself until an engine of the vehicle (20) stops running when an owner of the target digital key is using the vehicle (20) even when the reception delay period is longer than the pending deletion period.

8. A management server (70), in a management system (10) including a vehicle (20) and multiple devices (30), configured to manage registration of multiple digital keys to the vehicle (20), wherein
the vehicle (20) is configured to store first key-related information related to each of the digital keys,
each of the devices (30) is configured to store second key-related information related to at least one of the digital keys,
each digital key of the digital keys is configured to control the vehicle (20) when the first key-related information related to the digital key is stored in the vehicle (20) and the second key-related information related to the digital key is stored in one of the devices (30),
in response to a request to delete a target digital key, the target digital key being one of the digital keys that is a target of deletion, the management server (70) is configured to:
transmit a deletion request to a target device storing second target key-related information, thereby deleting the second target key-related information from the target device, the second target key-related information being the second key-related information related to the target digital key; and
transmit the deletion request to the vehicle (20), thereby deleting first target key-related information from the vehicle (20), the first target key-related information being the first key-related information related to the target digital key, and
when transmitting the deletion request, if both the target device and the vehicle (20) are in a non-communicable state, the management server (70) is further configured to retransmit the deletion request when at least one of the target device and the vehicle (20) is restored to a communicable state.

9. The management server (70) according to claim 8, wherein when transmitting the deletion request, if both the target device and the vehicle (20) are in a non-communicable state, the management server (70) is configured to repeatedly transmit the deletion request toward the target device until the target device is restored to a communicable state.

10. The management server (70) according to claim 8 or 9, wherein when transmitting the deletion request, if both the target device and the vehicle (20) are in a non-communicable state, the management server (70) is configured to repeatedly transmit the deletion request to the vehicle (20) until the vehicle (20) is restored to a communicable state.

11. The management server (70) according to claim 8 or 10, wherein
upon restoration from the non-communicable state to the communicable state, the target device is configured to transmit a restoration notification, and
upon receipt of the restoration notification from the target device, the management server (70) is configured to transmit the deletion request toward the target device.

12. The management server (70) according to any one of claims 8, 9 and 11, wherein
upon restoration from the non-communicable state to the communicable state, the vehicle (20) is configured to transmit a restoration notification, and
upon receipt of the restoration notification from the vehicle (20), the management server (70) is configured to transmit the deletion request toward the vehicle (20).

13. A deletion program (PC) configured to control a management server (70) in a management system (10),
the management system (10) includes a vehicle (20) and multiple devices (30),
the vehicle (20) is configured to store first key-related information related to each of digital keys,
each of the devices (30) is configured to store second key-related information related to at least one of the digital keys,
the management server (70) is configured to manage registration of the digital keys to the vehicle (20),
each digital key of the digital keys is configured to control the vehicle (20) when the first key-related information related to the digital key is stored in the vehicle (20) and the second key-related information related to the digital key is stored in one of the devices (30),
in response to a request to delete a target digital key, the target digital key being one of the digital keys that is a target of deletion, the deletion program (PC) is configured to cause the management server (70) to:
transmit a deletion request to a target device storing second target key-related information, thereby deleting the second target key-related information from the target device, the second target key-related information being the second key-related information related to the target digital key; and
transmit the deletion request to the vehicle (20), thereby deleting first target key-related information from the vehicle (20), the first target key-related information being the first key-related information related to the target digital key,
when transmitting the deletion request, if both the target device and the vehicle (20) are in a non-communicable state, the deletion program (PC) is further configured to cause the management server (70) to retransmit the deletion request when at least one of the target device and the vehicle (20) is restored to a communicable state.

14. A deletion method for deleting a target digital key, the target digital key being one of multiple digital keys used in a management system (10) and being a target of deletion, wherein
the management system (10) includes a vehicle (20), multiple devices (30), and a management server (70),
the vehicle (20) is configured to store first key-related information related to each of the digital keys,
each of the devices (30) is configured to store second key-related information related to at least one of the digital keys,
the management server (70) is configured to manage registration of the digital keys to the vehicle (20),
each digital key of the digital keys is configured to control the vehicle (20) when the first key-related information related to the digital key is stored in the vehicle (20) and the second key-related information related to the digital key is stored in one of the devices (30),
the deletion method, comprising:
transmitting, with the management server (70), a deletion request to a target device storing second target key-related information, thereby deleting the second target key-related information from the target device, the second target key-related information being the second key-related information related to the target digital key;
transmitting, with the management server (70), the deletion request to the vehicle (20), thereby deleting first target key-related information from the vehicle (20), the first target key-related information being the first key-related information related to the target digital key; and
when transmitting the deletion request, if both the target device and the vehicle (20) are in a non-communicable state, retransmitting, with the management server (70), the deletion request when at least one of the target device and the vehicle (20) is restored to a communicable state.
